# EUROPEAN PATENT SPECIFICATION

(11) **EP 2 999 272 B1**
(45) Date of publication and mention of the grant of the patent: **06.06.2018**
(21) Application number: 15183984.2
(22) Date of filing: 06.09.2015
(51) Int. Cl.: H04W 48/20, H04W 48/04

(54) **WIRELESS SLAVE DEVICE, WIRELESS MASTER DEVICE SELECTION METHOD, AND COMMUNICATION SYSTEM**
DRAHTLOSE SLAVE-VORRICHTUNG, AUSWAHLVERFAHREN FÜR DRAHTLOSE MASTER-VORRICHTUNG UND KOMMUNIKATIONSSYSTEM
DISPOSITIF ESCLAVE SANS FIL, PROCÉDÉ DE SÉLECTION DE DISPOSITIF MAÎTRE SANS FIL ET SYSTÈME DE COMMUNICATION

(30) Priority: 12.09.2014 JP 2014186664
(43) Date of publication of application: 23.03.2016
(73) Proprietor: Mitsubishi Electric Corporation, Chiyoda-ku Tokyo 100-8310 (JP)
(72) Inventor: Shida, Tetsuro, TOKYO 100-8310 (JP)
(74) Representative: Pfenning, Meinig & Partner mbB

(56) References cited:
- US-A1- 2013 308 470
- US-A1- 2014 220 984
- US-A1- 2014 241 328

## Description

### TECHNICAL FIELD

The present invention relates to a wireless slave device (client) that performs wireless communication with a wireless master device (base station), a wireless master device selection method used by a wireless slave device to select any one of a plurality of wireless master devices as a wireless master device with which to connect (a connection-destination wireless master device), and a communication system including a plurality of local wireless networks.

### BACKGROUND ART

In general, a local wireless network such as a wireless LAN (Local Area Network) forming a wireless communication system includes one wireless master device as a wireless access point and one or more wireless slave devices as wireless terminals. In order to construct the local wireless network, the wireless master device broadcasts (simultaneously broadcasts) beacon packets as network management packets including information concerning the local wireless network. The wireless slave device receives the broadcast beacon packets and decides whether or not the wireless master device which is a transmission source of the beacon packet is a wireless master device with which to connect (a connection-destination wireless master device). If the wireless slave device decides that the wireless master device which is a transmission source of the beacon packet is a wireless master device with which to connect, it sends the wireless master device a connection request signal, thereby joining the local wireless network to which the wireless master device belongs.

In general, in order to enable the wireless slave device to decide whether or not a transmission source of the beacon packet is a wireless master device with which it should connect, identification information of the wireless master device with which it should connect is preset in the wireless slave devices. In wireless LANs complying with the IEEE 802.11 standards, SSIDs (Service Set IDentifiers) are used as the identification information of wireless master devices. If identification information of the wireless master device with which to connect is preset in a wireless slave device, then even when a plurality of wireless master devices (candidate access points) are present around the wireless slave device, the wireless slave device can identify a wireless master device with which to connect from among the plurality of wireless master devices and establish a wireless connection with the identified wireless master device (access point). However, if identification information of the wireless master device with which to connect is not preset in the wireless slave device, the wireless slave device cannot identify the wireless master device with which to connect on the basis of the identification information.

A method by which a wireless slave device lacking identification information of wireless master devices selects a wireless master device with which to connect is proposed in, for example, patent reference 1. Patent reference 1 proposes a method of selecting a wireless master device with which to connect, in which, when there are a plurality of wireless master devices with which a wireless connection is possible, the number of the wireless slave devices that are connected to the wireless master devices, or the communication speeds of the links with the wireless master devices are evaluated, and a wireless master device with which to connect is selected on the basis of a result of the evaluation.

Patent reference 1 also proposes a method of selecting a wireless master device with which to connect, in which the wireless slave device extracts the wireless master devices positioned within a search range on the basis of information giving the position information of the wireless master devices and the position information of the wireless slave device, and communication information concerning the extracted wireless master devices is provided to wireless slave devices.

### PRIOR ART REFERENCE

### PATENT REFERENCE

Patent reference 1: Japanese Patent Application Publication No. 2014-22809

US 2013/0308470 A1 relates to a wireless network supporting extended coverage of service. A communications access point may provide access to a wireless communications network to a user device located at a first location. The communications access point may determine that the user device is moving from the first location to a second location where access to the wireless network is limited or not available. In response to the determination, the communications access point may provide access to the wireless network at the second location by extending a coverage area of the wireless network.

US 2014/0241328 A1 relates to a wireless terminal, information distribution apparatus, information distribution system, and specifying method and program. The information distribution system includes radio devices installed in carriages, wireless terminals, and an information distribution apparatus. Each wireless terminal includes: a first communication unit receiving radio signals transmitted by the radio devices; a determination unit specifying, based on a reception time period and signal strength of the radio signals received by the first communication unit, a radio device installed in the carriage and a second communication unit transmitting data indicative of the radio device specified by the determination unit to an information distribution apparatus. The information distribution apparatus includes: a receiving unit receiving data including identification information indicative of a radio device from which a wireless terminal has received a radio signal and a carriage in which a user of the wireless terminal is aboard; a generation unit generating a content including information corresponding to the carriage based on the data received and a distribution unit distributing the content.

US 2014/0220984 A1 relates to a method of predicting suitable candidates for user equipment cell reselection in mobile networks based on the direction of movement. In some embodiments, such a method may include determining, by a mobile device, a current direction of motion of the mobile device; determining, by the mobile device, based on network topology information, that at least two cells of a plurality of cells are located in the current direction of motion of the mobile device; prioritizing, by the mobile device, the at least two cells of the plurality of cells for reselection; measuring, by the mobile device, signal properties of the at least two prioritized cells based on the prioritizing; and selecting, by the mobile device, a first cell of the at least two prioritized cells for reselection, based on: a location of the first cell and the signal properties of the first cell.

### SUMMARY OF THE INVENTION

### PROBLEM TO BE SOLVED BY THE INVENTION

However, in the method of selecting a wireless master device with which to connect on the basis of the result of the evaluation of the number of connected devices or communication speeds of the wireless slave devices, there is a problem that there is a case where a transmission source of the wireless signal that has the strongest received wireless signal strength is not selected as a wireless master unit with which to connect.

In the method in which communication information concerning wireless master devices selected on the basis of the position information of the wireless master devices and the position information of the wireless slave device is provided to the wireless slave device, the wireless slave device needs to include means for measuring an absolute position of the wireless slave device as an own device and needs to hold the absolute position information of the wireless master device with which to connect. However, in general, there is a problem that it is impossible to notify the wireless slave device of the absolute position of the wireless master device with which to connect, by wireless communication using beacon packets before the local wireless network is constructed.

Furthermore, there is a problem that if, by a worker's manual procedures, identification information of the wireless master device with which to connect is entered in each of a plurality of wireless slave devices, the labor cost of constructing the communication system increases, and addition of an interface for input of the identification information of the wireless master device leads to an increase of manufacturing cost of the wireless slave device.

An object of the present invention is therefore to provide a wireless slave device and a communication system that can properly select a wireless master device with which to connect from among a plurality of wireless master devices while suppressing labor cost and manufacturing cost, and a wireless master device selection method by which a wireless slave device can properly select a wireless master device with which to connect from among a plurality of wireless master devices while suppressing labor cost and manufacturing cost of the wireless slave device.

### MEANS FOR SOLVING THE PROBLEM

The object of the present invention is solved by the independent claims. Advantageous embodiments are described by the dependent claims.

### EFFECTS OF THE INVENTION

In the present invention, the wireless slave device as an own device obtains information indicating its installation position (intra-wireless-cell slave device's position) in the wireless cell in which the own device is installed, obtains information indicating the positions (intra-communication-system cell positions) of the wireless cells in which each master device is installed in the communication system, obtains measured values of the received signal strengths of a plurality of the network management packets in association with the intra-communication-system cell positions, obtains predicted values of the received signal strengths of the plurality of the network management packets in the intra-wireless-cell slave device position, finds out a wireless cell inferred to be the same wireless cell as the wireless cell (wireless-slave-unit belonging wireless cell), to which the own device belongs, on the basis of a result of the comparison of the predicted and measured values, and designates the wireless master device installed in the wireless cell as a connection-destination wireless master device with which the own device should connect. Therefore, according to the present invention, the labor of constructing the communication system are reduced, labor cost can be reduced, and the cost of manufacturing the wireless slave device is reduced because it is not necessary to provide an interface for input of identification information of the connection-destination wireless master device. In addition, according to the present invention, it is possible to properly select the wireless master device with which to connect because the predicted values of the received signal strengths that are obtained by taking into account of not only positions of the wireless cells in the communication system but also position of the wireless slave device in the wireless cell are used.

### BRIEF DESCRIPTION OF THE DRAWINGS

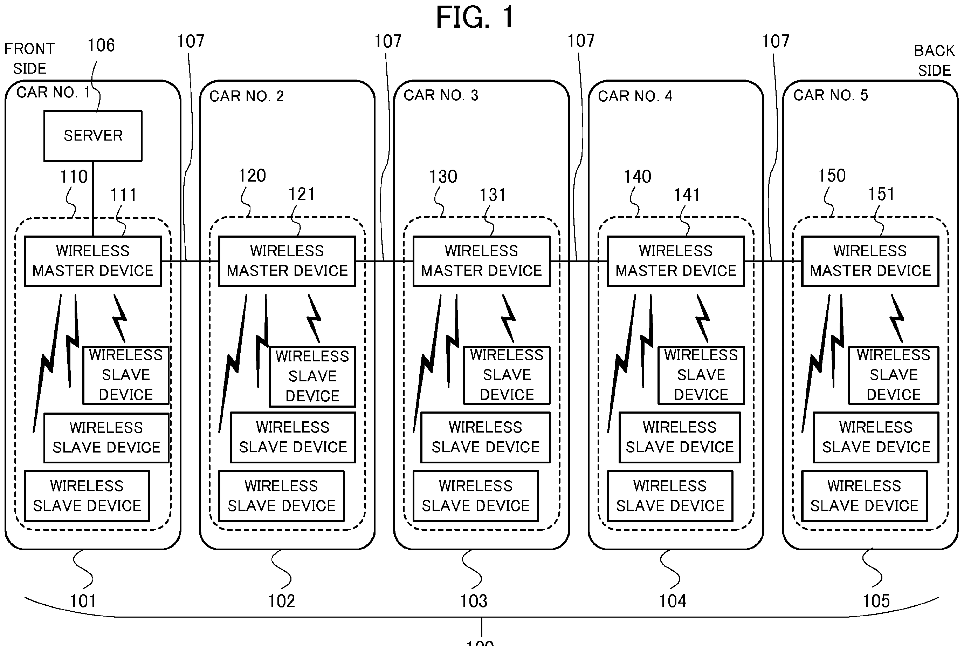

FIG. 1 is a diagram schematically showing a configuration of a communication system according to an embodiment of the present invention.

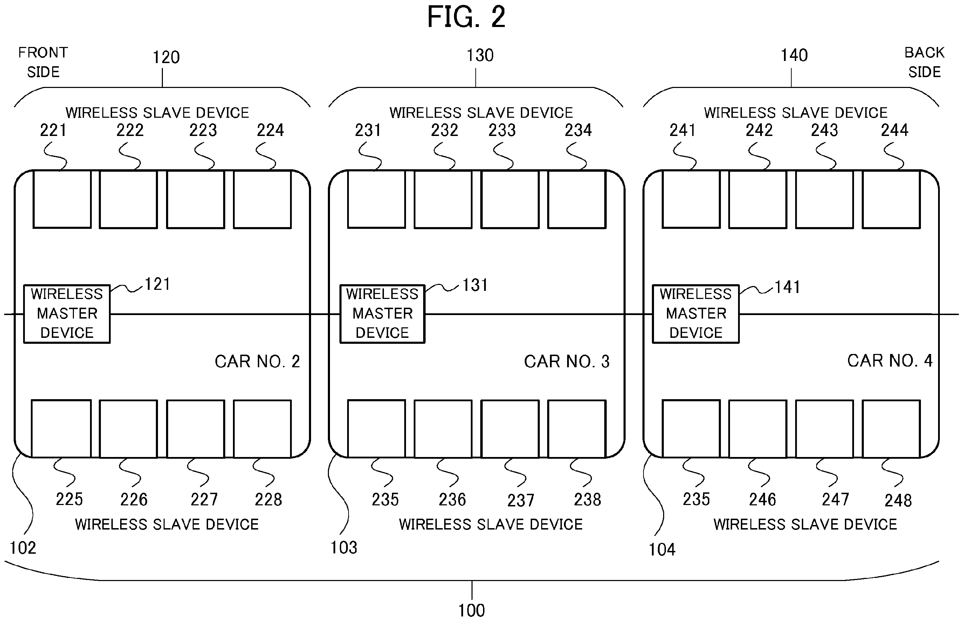

FIG. 2 is a diagram schematically showing configurations of local wireless networks in the communication system according to the present embodiment.

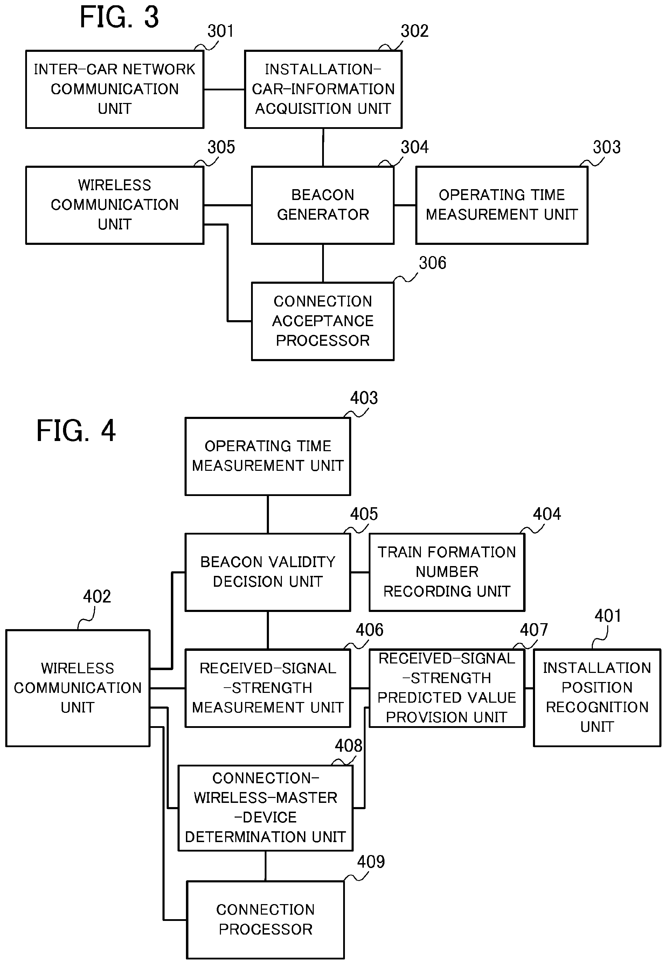

FIG. 3 is a block diagram schematically showing a configuration of a wireless master device in the communication system according to the present embodiment.
FIG. 4 is a block diagram schematically showing a configuration of a wireless slave device in the communication system according to the present embodiment.

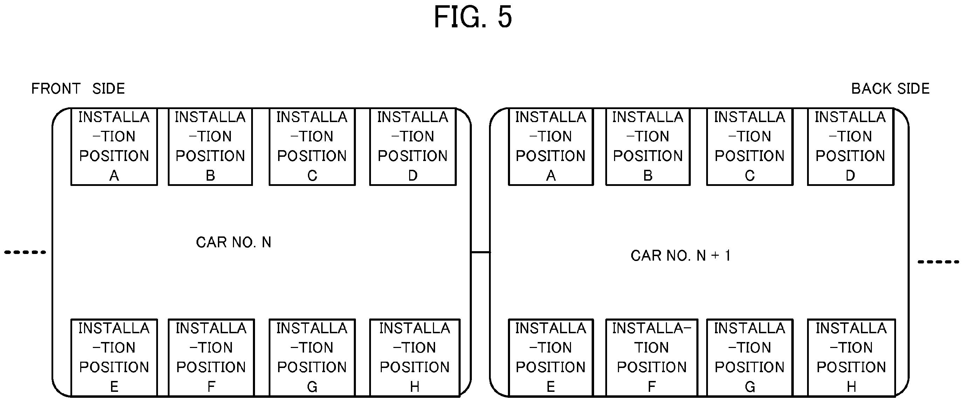

FIG. 5 is a plan view schematically showing an example of intra-wireless-cell slave devices' positions (intra-car slave devices' positions) which are installation positions of the wireless slave devices in the communication system according to the present embodiment.

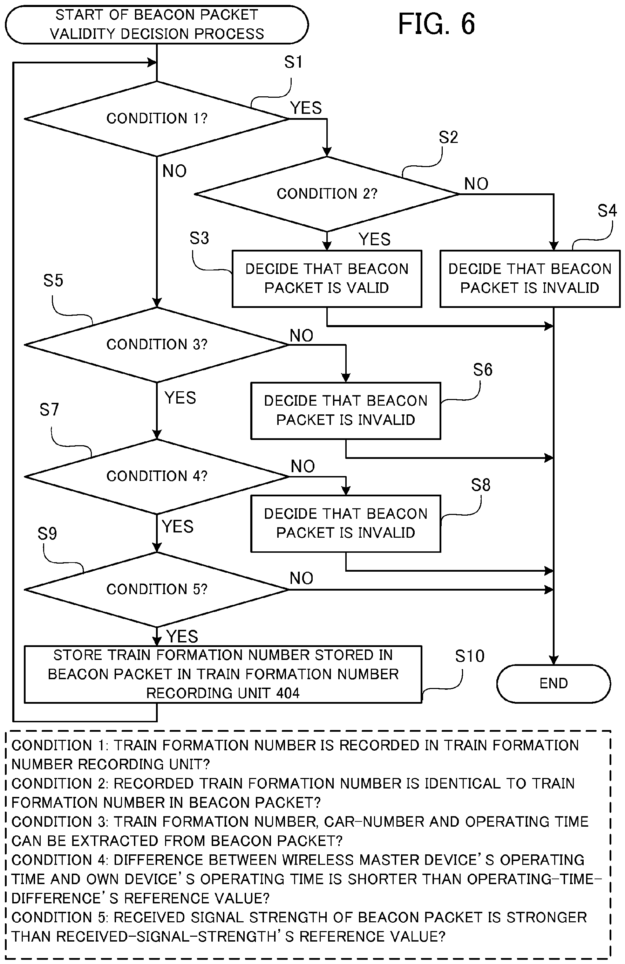

FIG. 6 is a flowchart showing a beacon packet validity decision process executed by the wireless slave device in the communication system according to the present embodiment.

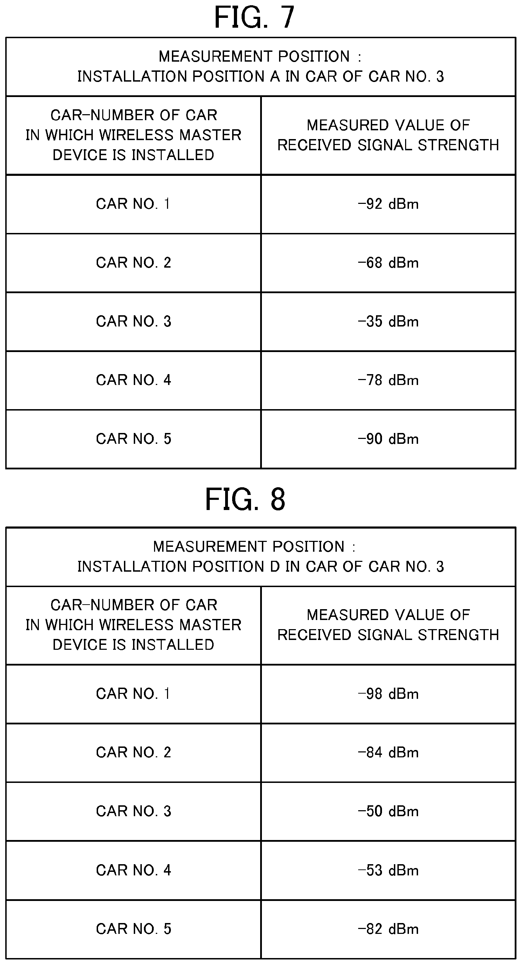

FIG. 7 is a diagram showing, in table form, an example of measured values of the received signal strengths of a plurality of beacon packets received at installation position (intra-car slave device's position) A at the front side in the car of car No. 3.
FIG. 8 is a diagram showing, in table form, an example of measured values of the received signal strengths of a plurality of beacon packets received at installation position (intra-car slave device's position) D at the back side in the car of car No. 3.

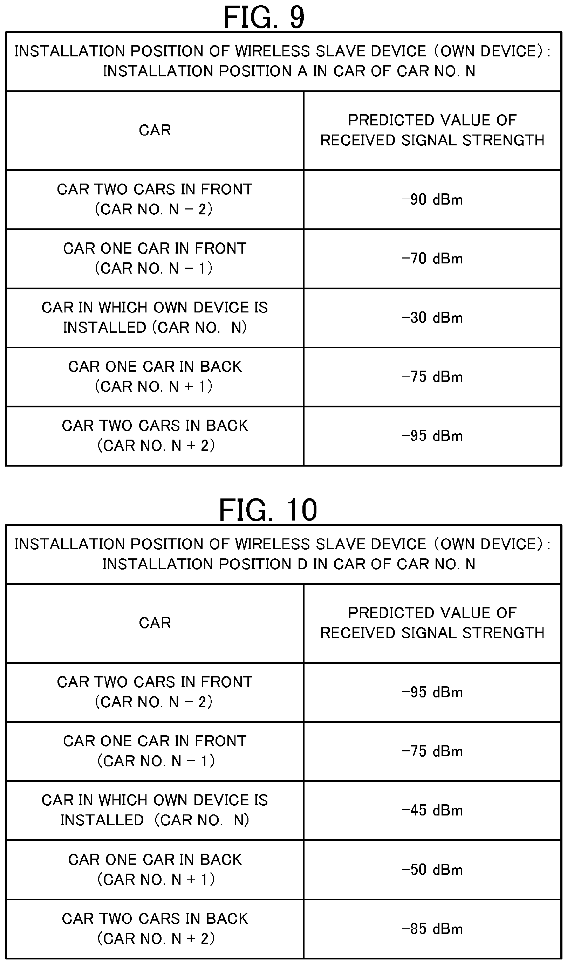

FIG. 9 is a diagram showing, in table form, an example of predicted values of the received signal strengths of a plurality of beacon packets received by a wireless slave device installed at installation position (intra-car slave device's position) A in a certain car.
FIG. 10 is a diagram showing, in table form, an example of predicted values of the received signal strengths of beacon packets received by a wireless slave device installed at installation position (intra-car slave device's position) D in a certain car.

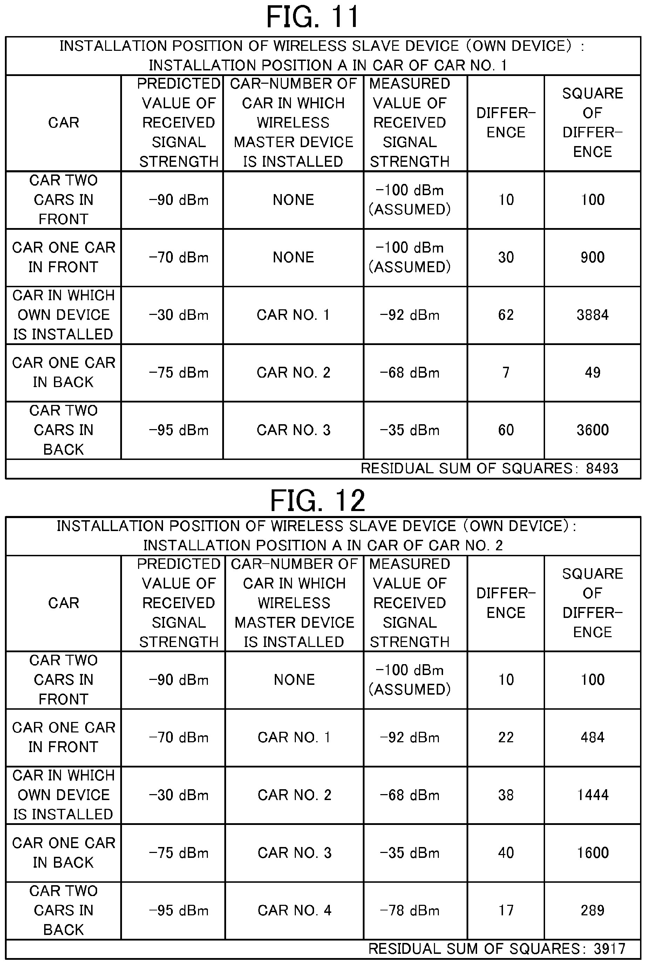

FIG. 11 concerns the present embodiment and is a diagram showing, in table form, predicted values (estimated values) of the received signal strengths of a plurality of beacon packets received by a wireless slave device installed at installation position (intra-car slave device's position) A in a car of car No. 1, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares).
FIG. 12 concerns the present embodiment and is a diagram showing, in table form, predicted values of the received signal strengths of a plurality of beacon packets received by a wireless slave device installed at installation position (intra-car slave device's position) A in a car of car No. 2, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).

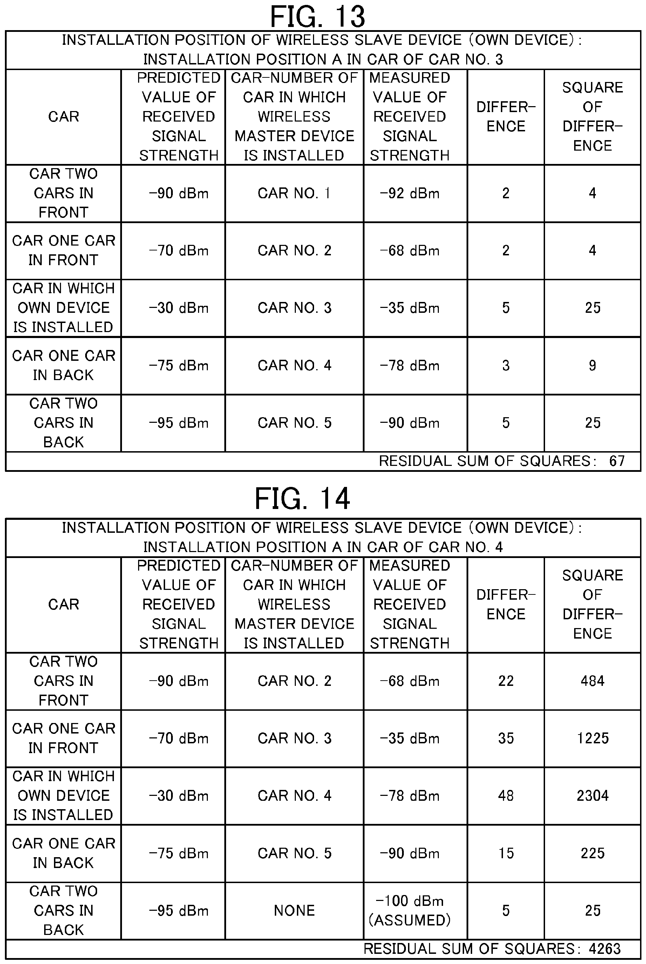

FIG. 13 concerns the present embodiment and is a diagram showing, in table form, predicted values of the received signal strengths of a plurality of beacon packets received by a wireless slave device installed at installation position (intra-car slave device's position) A in a car of car No. 3, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).
FIG. 14 concerns the present embodiment and is a diagram showing, in table form, predicted values of the received signal strengths of a plurality of beacon packets received by a wireless slave device installed at installation position (intra-car slave device's position) A in a car of car No. 4, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).

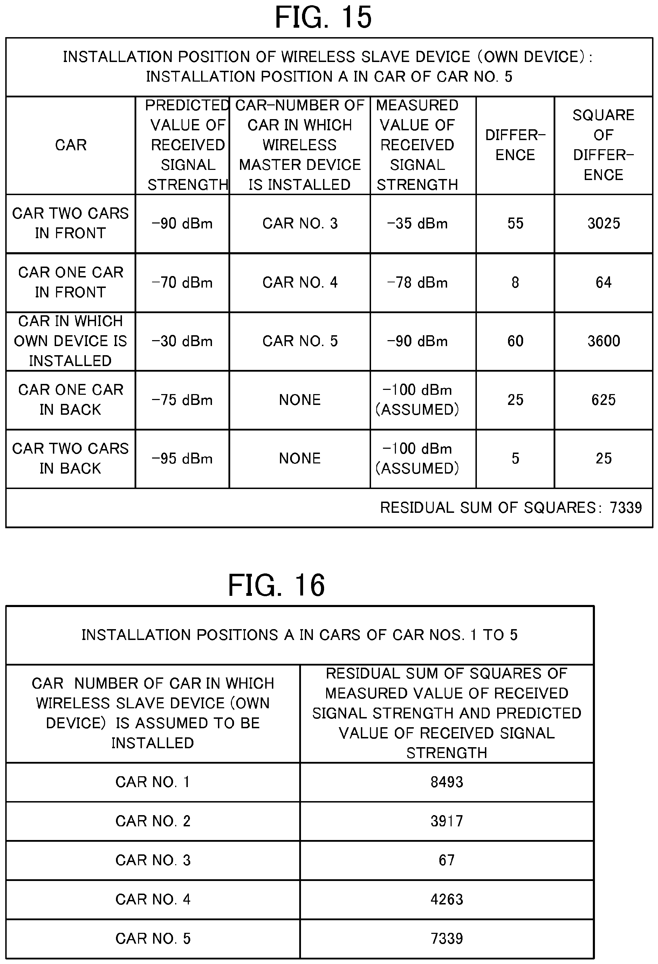

FIG. 15 concerns the present embodiment and is a diagram showing, in table form, predicted values of the received signal strengths of a plurality of beacon packets received by a wireless slave device installed at installation position (intra-car slave device's position) A in a car of car No. 5, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).
FIG. 16 concerns the present embodiment and is a diagram showing, in table form, the sum of the squares of the differences (the residual sum of squares) between the measured values of the received signal strengths and the predicted values of the received signal strengths of the plurality of beacon packets received by the wireless slave devices installed at installation position (intra-car slave device's position) A in the cars of car No. 1 to car No.5.

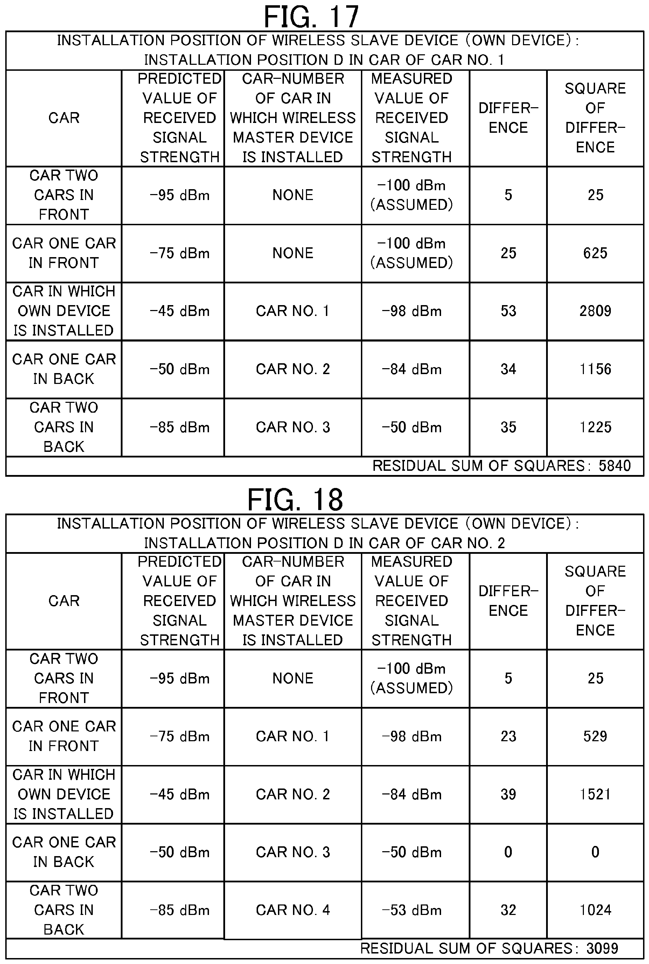

FIG. 17 concerns the present embodiment and is a diagram showing, in table form, predicted values (estimated values) of the received signal strengths of a plurality of beacon packets received by a wireless slave device installed at installation position (intra-car slave device's position) D in the car of car No. 1, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares).
FIG. 18 concerns the present embodiment and is a diagram showing, in table form, predicted values of the received signal strengths of a plurality of beacon packets received by a wireless slave device installed at installation position (intra-car slave device's position) D in the car of car No. 2, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).

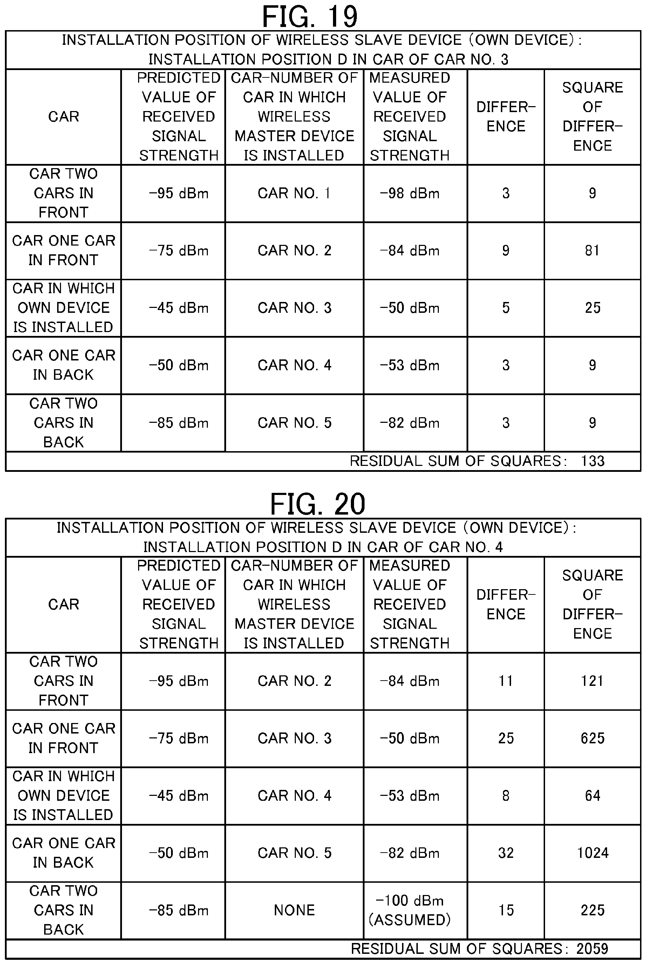

FIG. 19 concerns the present embodiment and is a diagram showing, in table form, predicted values of the received signal strengths of a plurality of beacon packets received by a wireless slave device installed at installation position (intra-car slave device's position) D in the car of car No. 3, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).
FIG. 20 concerns the present embodiment and is a diagram showing, in table form, predicted values of the received signal strengths of a plurality of beacon packets received by a wireless slave device installed at installation position (intra-car slave device's position) D in the car of car No. 4, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).

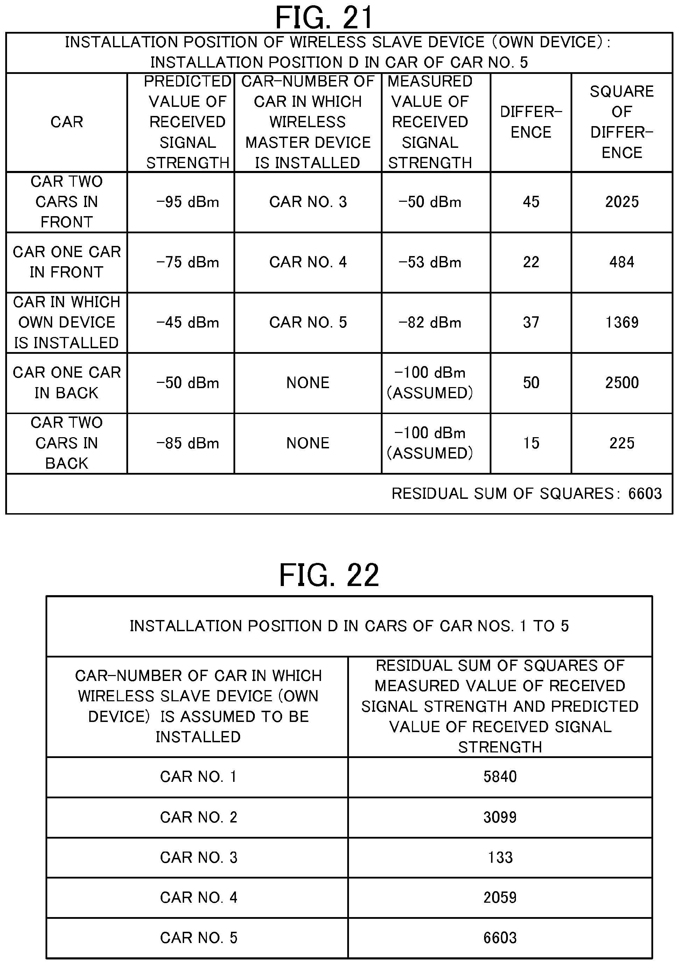

FIG. 21 concerns the present embodiment and is a diagram showing, in table form, predicted values of the received signal strengths of a plurality of beacon packets received by a wireless slave device installed at installation position (intra-car slave device's position) D in the car of car No. 5, the car-numbers of the cars in which the wireless master devices that transmit the beacon packets are installed, measured values of the received signal strengths, the differences (absolute values) between the predicted and measured values, the squares of the differences, and the sum of the squares of the differences (the residual sum of squares).
FIG. 22 concerns the present embodiment and is a diagram showing, in table form, the sum of the squares of the differences (the residual sum of squares) between the measured values of the received signal strengths and the predicted values of the received signal strengths of the plurality of beacon packets received by the wireless slave devices installed at installation position (intra-car slave device's position) D in the cars of car No. 1 to car No 5.

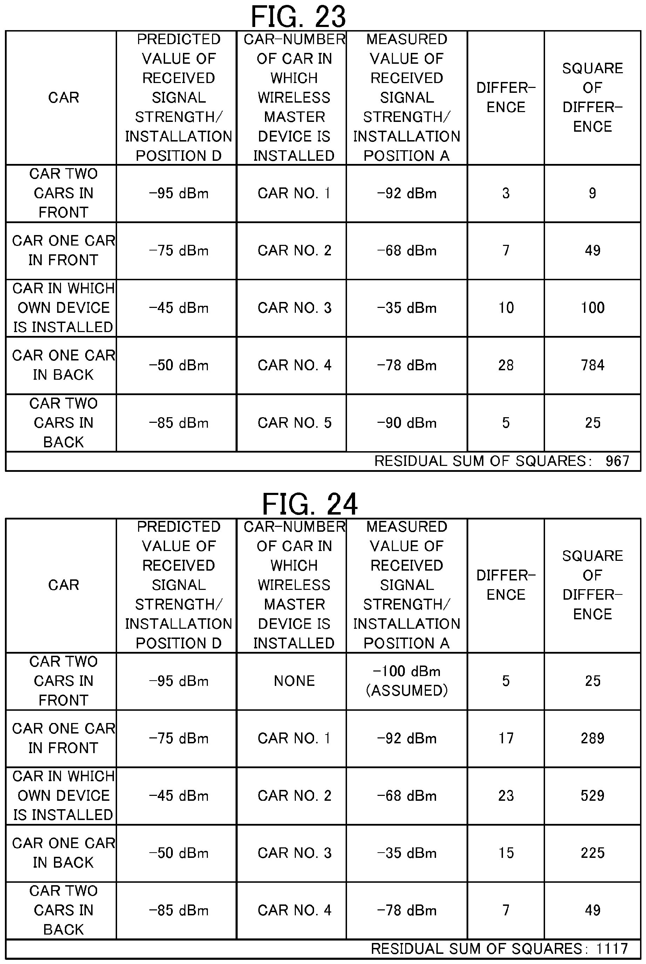

FIG. 23 concerns a comparative example and is a diagram showing, in table form, the sum of the squares of the differences (the residual sum of squares) between predicted values of the received signal strengths of a plurality of beacon packets received by a wireless slave device installed at installation position (intra-car slave device's position) D in the car of car No. 3 and measured values of the received signal strengths of a plurality of beacon packets received by a wireless slave device installed at installation position (intra-car slave device's position) A in the car of car No. 3.
FIG. 24 concerns a comparative example and is a diagram showing, in table form, the sum of the squares of the differences (the residual sum of squares) between predicted values of the received signal strengths of a plurality of beacon packets received by a wireless slave device installed at installation position (intra-car slave device's position) D in the car of car No. 2 and measured values of the received signal strengths of a plurality of beacon packets received by a wireless slave device installed at installation position (intra-car slave device's position) A in the car of car No. 2.

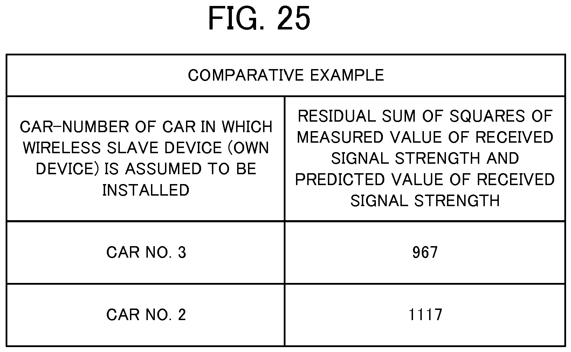

FIG. 25 concerns a comparative example and is a diagram showing, in table form, the sum of the squares of the differences (the residual sum of squares) between the predicted values of the received signal strengths of the plurality of beacon packets received by the wireless slave devices installed at installation position (intra-car slave device's position) D in the cars of car No. 3 and car No. 2 and the measured values of the received signal strengths of the plurality of beacon packets received by the wireless slave devices installed at installation position (intra-car slave device's position) A in the cars of car No. 3 and car No. 2.

### MODE FOR CARRYING OUT THE INVENTION

### <Communication System>

FIG. 1 is a diagram schematically showing a configuration of a communication system according to an embodiment of the present invention. The communication system according to the present embodiment is a train communication system mounted in a railroad train 100 including a linked plurality of cars 101, 102, 103, 104, 105. Furthermore, the communication system according to the present embodiment is a communication system including a wireless slave device that can carry out a wireless master device selection method to which the present invention is applied. In FIG. 1, a case where the number of the cars that constitute the railroad train 100 is five is shown, but the number of the cars may be a number other than five, as long as it is two or more. Moreover, the present invention is applicable to communication systems other than railroad train communication systems, as long as these communication systems allow a wireless slave device to automatically select a connection-destination wireless master device.

As shown in FIG. 1, the communication system according to the present embodiment includes a plurality of local wireless networks 110, 120, 130, 140, 150. The plurality of local wireless networks 110, 120, 130, 140, 150 are configured, respectively, in the plurality of cars 101, 102, 103, 104, 105 as a plurality of wireless cells which are predetermined areas. Each of the local wireless networks 110, 120, 130, 140, 150 includes one wireless master device as an access point and one or more wireless slave devices as wireless terminals. In the railroad train 100 shown in FIG. 1, the local wireless network 110 is configured in the car (wireless cell) 101 of car No. 1, the local wireless network 120 is configured in the car (wireless cell) 102 of car No. 2, the local wireless network 130 is configured in the car (wireless cell) 103 of car No. 3, the local wireless network 140 is configured in the car (wireless cell) 104 of car No. 4, and the local wireless network 150 is configured in the car (wireless cell) 105 of car No. 5. Furthermore, a server 106 is disposed in the car 101 of car No. 1, which is a lead car. The server 106 is communicably connected to the wireless master devices 111, 121, 131, 141, 151 in the respective cars through an inter-car network 107. The server 106 may be installed in a position other than the car 101 of car No. 1, that is, in any of the other cars, for example.

FIG. 2 is a diagram schematically showing configurations of local wireless networks in the communication system according to the present embodiment. FIG. 2 shows the car 102 of car No. 2, the car 103 of car No. 3, and the car 104 of car No. 4 in the railroad train 100 shown in FIG. 1. The local wireless network 120 configured in the car 102 of car No. 2 includes the wireless master device 121 and eight wireless slave devices 221 to 228. The local wireless network 130 configured in the car 103 of car No. 3 includes the wireless master device 131 and eight wireless slave devices 231 to 238. The local wireless network 140 configured in the car 104 of car No. 4 includes the wireless master device 141 and eight wireless slave devices 241 to 248. The number of the wireless slave devices mounted in each car may be a number other than eight. Furthermore, FIG. 2 shows a case in which the installation positions of the wireless slave devices are predetermined in each car. The installation positions of the wireless slave devices in each car are the same position in each car.

By configuring the local wireless networks 110, 120, 130, 140, 150 in the cars 101, 102, 103, 104, 105 respectively as shown in FIG. 1 and FIG. 2, provision of unique services (for example, provision of video information, audio information, and so on) from the wireless master device to the wireless slave devices can be easily performed in each of the cars 101, 102, 103, 104, 105. For example, if the car 103 of car No. 3 is a women-only car in which only women are allowed to ride and the cars 101, 102, 104, 105 other than the car 103 of car No. 3 are general cars in which passengers other than women are also allowed to ride, then the wireless master devices 111, 121, 141, 151 in the cars 101, 102, 104, 105 other than the car 103 of car No. 3 can provide general service (that is, information-providing service intended for a general passenger) to the wireless slave devices in the same car while the wireless master device 131 in the car 103 of car No. 3 can provide its wireless slave devices with women-oriented service (a specialized service differing from the general service). Furthermore, for example, if the car 103 of car No. 3 is a reserved-seat car, the car 104 of car No. 4 is a first-class reserved-seat car, and the cars 101, 102, 105 of the other car-numbers are non-reserved-seat cars, the wireless master device in each car may provide the wireless slave devices in the same car with service suitable for each car.

### <Wireless Master Device>

FIG. 3 is a block diagram schematically showing a configuration of each wireless master device 111, 121, 131, 141, 151 in the communication system according to the present embodiment. The wireless master devices 111, 121, 131, 141, 151 have the configuration shown in FIG. 3. FIG. 3 will be used to describe the wireless master device 121, but the wireless master devices 111, 131, 141, and 151 have the same configuration and functions as the wireless master device 121. As shown in FIG. 3, the wireless master device 121 includes an inter-car network communication unit 301, an installation-car-information acquisition unit 302, an operating time measurement unit 303, a beacon generator 304, a wireless communication unit 305, and a connection acceptance processor 306.

The inter-car network communication unit 301 in the wireless master device 121 has the function of communicating with the wireless master devices 111, 131, 141, 151 installed in the cars 101, 103, 104, 105 other than the car 102 in which the wireless master device 121 itself is installed, and with the server 106, through the inter-car communication network 107 and the like. The inter-car network communication unit 301 is communicably connected to the server 106 through the inter-car communication network 107. There are no particular restrictions on the communication network system used by the inter-car communication network 107, which may be either a wired network or a wireless network.

The function of the installation-car-information acquisition unit 302 in the wireless master device 121 has the function of obtaining car information about the car 102 in which the wireless master device 121 itself is installed, from the server 106, for example. The car information includes a train formation number indicating the railroad train 100 that includes the car 102, and a car-number indicating the car in which the wireless master device 121 is installed. The train formation number is a train identification number as train identification information that is unique to each railroad train. The car-number is a car identification number as car identification information that is unique to each car in the railroad train 100. For example, a car-number of the car of car No. 1 is '1', and a car-number of the car of car No. 2 is '2'. The installation-car-information acquisition unit 302 obtains the train formation number and the car-number from the server 106 through the inter-car communication network 107, for example. The installation-car-information acquisition unit 302 may obtain the train formation number and car-number from another system mounted in the railroad train (for example, a train information management system that manages information related to the operation of the railroad train), or from a system or other facility external to the railroad train. The method by which the installation-car-information acquisition unit 302 obtains the car information is not limited.

The operating time measurement unit 303 in the wireless master device 121 has the function of measuring the wireless master device's operating time, which is the elapsed time from a time of power-on (start-up) of the wireless master device 121 itself.

The beacon generator 304 in the wireless master device 121 has the function of generating beacon packets, which are communication packets used as network management packets that include the car information obtained by the installation-car-information acquisition unit 302 in the wireless master unit 121. A beacon packet includes not only the car information but also the operating time measured by the operating time measurement unit 303. The communication packets generated by the beacon generator 304 may be communication packets other than beacon packets, as long as they are network management packets that can be received not only by the wireless slave devices belonging to the local wireless network to which the wireless master device 121 itself belongs (wireless terminals that have already joined the local wireless network and can carry out decryption) but also by the wireless slave devices not belonging to this local wireless network (wireless terminals that have not yet joined the local wireless network and cannot carry out decryption). In the present embodiment, however, a case where the communication packets generated by the beacon generator 304 are beacon packets and these beacon packets include the train formation number, the car-number, and the operating time will be described. There are no particular restrictions on the method by which the beacon packets store the train formation number and car-number. For example, if the local wireless network complies with any of the IEEE 802.11a/b/g/n wireless LAN standards, data including the train formation number and car-number may be stored in the SSID (Service Set Identifier) field, which gives information for identifying the wireless master device in the beacon packet. It is also possible to provide a vendor specific element that can store information in the beacon packets, and store data including the train formation number, car-number, and operating time therein. In addition, for example, each of the network management packets includes car-number information indicating a car-number assigned to each car of the plurality of cars 101, 102, 103, 104, 105, the car-number assigned to each car indicating order of each car of the plurality of cars in the railroad train formed by an array of the plurality of cars 101, 102, 103, 104, 105, and the car-number indicated by the car-number information included in a network management packet is a car-number assigned to a car in which a wireless master device as a transmission source transmitting the network management packet is installed.

The wireless communication unit 305 in the wireless master device 121 has the function of performing wireless communication with, for example, the wireless slave devices (e.g., 221 to 228 in FIG. 2) in the car 102. The wireless communication unit 305 transmits the beacon packets generated by the beacon generator 304. Furthermore, the wireless communication unit 305 in the wireless master device 121 carries out communication with the wireless slave devices (e.g., 221 to 228 in FIG. 2) that are installed in the same car 102 as the wireless master device 121 itself and form the local wireless network 120.

The connection acceptance processor 306 in the wireless master device 121 has the function of receiving connection requests from the wireless slave devices (e.g., 221 to 228 in FIG. 2) installed in the car 102 in which the wireless master device 121 is installed. The connection acceptance processor 306 receives connection requests asking to join the local wireless network 120 to which the wireless master device 121 itself belongs, from the wireless slave devices (e.g., 221 to 228 in FIG. 2) installed in the same car 102 as the wireless master device 121, and carries out processing that allows the wireless slave devices that transmitted the joint requests to join the local wireless network.

### < Wireless Slave Device >

FIG. 4 is a block diagram schematically showing a configuration of a wireless slave device in the communication system according to the present embodiment. The wireless slave devices shown in FIG. 1 and the wireless slave devices 221 to 228, 231 to 238, and 241 to 248 shown in FIG. 2 have the configuration shown in FIG. 4. FIG. 4 will be used to describe the wireless slave device 221, but the other wireless slave devices have the same configuration and functions as the wireless slave device 221. The wireless slave device 221 shown in FIG. 4 includes an installation position recognition unit 401, a wireless communication unit 402, an operating time measurement unit 403, a train formation number recording unit 404, a beacon validity decision unit 405, a received-signal-strength measurement unit 406, a received-signal-strength predicted-value provision unit 407, a connection-wireless-master-device determination unit 408, and a connection processor 409.

The wireless communication unit 402 of the wireless slave device receives a plurality of beacon packets transmitted by the plurality of wireless master devices 111, 121, 131, 141, 151 corresponding to the cars 101, 102, 103, 104, 105 as the plurality of wireless cells. The installation position recognition unit 401 obtains information indicating the intra-car slave device's position (intra-wireless-cell slave device's position). This is installation position of the wireless slave device as an own device in the wireless cell in which the wireless slave device as the own device is installed, which may be any one of the plurality of wireless cells 101, 102, 103, 104, 105. The received-signal-strength measurement unit 406 obtains information indicating an intra-communication-system car position (an intra-communication-system cell position) that is a position in the communication system at which each wireless master device of the plurality of wireless master devices 111, 121, 131, 141, 151 is installed, from the plurality of beacon packets, and obtains measured values of the received signal strengths (RSSI) of the plurality of beacon packets in association with each information indicating a plurality of intra-communication-system car positions (e.g., FIG. 7 and FIG. 8 described later). The received-signal-strength predicted-value provision unit 407 provides predicted values of the received signal strengths of the plurality of beacon packets at each intra-car slave device's position (e.g., FIG. 9 and FIG. 10 described later). The connection-wireless-master-device determination unit 408 compares the predicted values provided from the received-signal-strength predicted-value provision unit 407 and the measured values obtained by the received-signal-strength measurement unit 406 and designates, from among the plurality of wireless master devices 111, 121, 131, 141, 151, the wireless master device inferred from the result of the comparison to be installed in the car in which the wireless slave device as the own device is installed, as the connection-destination wireless master device with which the own device should connect. The connection processor 409 carries out processing to connect with the connection-destination wireless master device designated by the connection-wireless-master-device determination unit 408.

The received-signal-strength predicted-value provision unit 407 may store in advance a table of predicted values of the received signal strengths of the plurality of beacon packets at a plurality of candidate installation positions for the wireless slave devices in the car (including installation positions in which the wireless slave devices are already installed and installable positions in which no wireless slave device is yet installed). Alternatively, the received-signal-strength predicted-value provision unit 407 may obtain the table of predicted values of the received signal strengths of the plurality of beacon packets at the plurality of candidate installation positions for the wireless slave devices in the car, from a beacon packet. The received-signal-strength predicted-value provision unit 407 may select the predicted values to use for comparison with the measured values from the table of the predicted value on the basis of the obtained intra-car-slave device's position and provide the selected ones.

The wireless slave device also includes an operating time measurement unit (slave-device-operating-time measurement unit) 403 that measures the wireless slave device's operating time, which is the elapsed time from a time of power-on of the own device, and a beacon validity decision unit 405 that extracts wireless master devices' operating times, which are the operating times of the plurality of wireless master devices and are included in the plurality of beacon packets. The received-signal-strength measurement unit 406 may be configured to perform the measurement of the received signal strength of a beacon packet from which a wireless master device's operating time is extracted if the time difference between the wireless slave device's operating time and the wireless master device's operating time is less than a predetermined reference time difference, and not to perform the measurement of the received signal strength of a beacon packet from which a wireless master device's operating time is extracted if the time difference is equal to or greater than the reference time difference.

Furthermore, the train formation number recording unit 404 of the wireless slave device may be configured to record the train formation number and car-number stored in the beacon packet transmitted from the connection-destination wireless master device, and to delete the recorded information when the power of the wireless slave device as the own device is shut off.

The received-signal-strength measurement unit 406 in the wireless slave device may be configured so that if a train formation number and car-number are recorded in the train formation number recording unit 404, it does not perform the measurement of the received signal strength of the beacon packet; if neither train formation number nor car-number are recorded in the train formation number recording unit 404 and the time difference between the wireless slave device's operating time and the wireless master device's operating time is less than the predetermined reference time difference, it performs the measurement of the received signal strength of the beacon packet from which the wireless master device's operating time was extracted; and if neither train formation number nor car-number are recorded in the train formation number recording unit 404 and the time difference is equal to or greater than the predetermined reference time difference, it does not perform the measurement of the received signal strength of the beacon packet from which the wireless master device's operating time was

### extracted.

### <Installation Position Recognition Unit 401 in Wireless Slave Device>

The installation position recognition unit 401 recognizes the intra-car slave device's position (intra-wireless-cell slave device's position), which is the installation position of the wireless slave device as the own device in the car 102. FIG. 5 is a plan view schematically showing an example of intra-car slave devices' positions which are installation positions of the wireless slave devices in the communication system according to the present embodiment. For example, in the car of car No. N (N is an integer equal to or greater than 1), the wireless slave devices are installed at installation positions A to H respectively. In FIG. 5, installation positions A and E are those located at the front in the car; installation positions B and F are those located second from the front in the car; installation positions C and G are those located third from the front in the car; installation positions D and H are those located at the back in the car. In this way, in the example in FIG. 5, the installation positions of the wireless slave devices in each car can be assigned arbitrarily (any of the predetermined installable positions may be assigned).

The method by which the installation position recognition unit 401 recognizes its installation position in each car is not particularly limited. For example, the installation position recognition unit 401 may have a DIP (Dual In-line Package) switch, and the installation position of its wireless slave device may be specified by setting a combination of the plurality of switch portions in the DIP switch when the wireless slave device is installed. Alternatively, means for indicating the installation position mechanically, electrically, magnetically, or graphically may be provided at the wireless slave device installation positions in each car, and after a wireless slave device has been installed, the installation position recognition unit 401 of this wireless slave device may recognize its installation position by reading installation position information from the means for indicating the installation position. For example, the means for indicating the installation position mechanically is a means in which the shape of the connector of the power cable (the position or shape of a projection or the like) indicates the installation position, and the installation position recognition unit 401 recognizes the wireless slave device's position in the car on the basis of this shape. For example, the means for indicating the installation position electrically is a means in which the power cable is provided with an auxiliary wire other than the power supply wires, and the installation position recognition unit 401 obtains installation position information through the auxiliary wire. For example, the means for indicating the installation position magnetically is a means in which a magnetic card or the like is provided at each installation position, the wireless slave device has a magnetic card reader, and installation position information is obtained by having the wireless slave device read the magnetic card. For example, the means for indicating the installation position graphically is a means in which a barcode or the like is adhered to each installation position, the wireless slave device has a barcode reader, and installation position information is obtained by having the wireless slave device read the barcode.

Having the installation position recognition units 401 recognize the installation positions when the wireless slave devices are installed in each car, the wireless slave devices do not need to have their installation positions specified in advance. Since when the wireless slave devices are installed, it is not necessary to match the installation positions set in the wireless slave devices with their installation positions in the car, the installation task can be reduced. Furthermore, manufacturing costs can be reduced, because it is not necessary to provide an interface (e.g., a text input means or the like) for input of the installation positions to the wireless slave devices.

### <Wireless Communication Unit 402 in Wireless Slave Device>

The wireless communication unit 402 in the wireless slave device receives radio waves from the wireless master devices and carries out wireless communication. The wireless communication unit 402 receives communication packets including train formation numbers and car-numbers transmitted from a plurality of neighboring wireless master devices. When the wireless master devices transmit beacon packets including the train formation numbers and car-numbers, the wireless communication unit 402 receives the beacon packets.

### <Operating Time Measurement Unit 403 in Wireless Slave Device>

The operating time measurement unit 403 in the wireless slave device measures the operating time of the wireless slave device, which is the elapsed time from a time of power-on of the wireless slave device as the own device.

### <Train Formation Number Recording Unit 404 in Wireless Slave Device>

The train formation number recording unit 404 in the wireless slave device stores the train formation number identifying the railroad train 100 including the car in which the wireless slave device as the own device is installed. The train formation number recording unit 404 may be a volatile memory, the content of which is not retained when the wireless slave device's power is shut off.

### <Beacon Validity Decision Unit 405 in Wireless Slave Device>

The beacon validity decision unit 405 in the wireless slave device decides whether or not a beacon packet received by the wireless communication unit 402 was transmitted from a wireless master device installed in the railroad train 100. For example, the beacon validity decision unit 405 in the wireless slave device receives the beacon packets transmitted from the wireless master devices, decides that only the beacon packets transmitted from the wireless master devices installed in the railroad train 100 are valid, decides that beacon packets transmitted from devices other than the wireless master devices installed in the railroad train 100 are invalid, and notifies the received-signal-strength measurement unit 406 of its decisions.

FIG. 6 is a flowchart showing the beacon packet validity decision process executed by the beacon validity decision unit 405 in the wireless slave device in the communication system according to the present embodiment. When the wireless communication unit 402 receives a beacon packet, the beacon validity decision unit 405 initiates the process to decide the validity of the received beacon packet. First the beacon validity decision unit 405 determines whether or not a train formation number is recorded in the train formation number recording unit 404 (that is, whether or not condition 1 is satisfied) (step S1). If condition 1 is satisfied (YES in step S1), that is, if a train formation number is recorded in the train formation number recording unit 404, the beacon validity decision unit 405 decides whether or not the train formation number recorded in the train formation number recording unit 404 is identical to the train formation number stored in the received beacon packet (that is, whether or not condition 2 is satisfied) (step S2). If condition 2 is satisfied (YES in step S2), that is, if the train formation number recorded in the train formation number recording unit 404 is identical to the train formation number stored in the received beacon packet, the beacon validity decision unit 405 decides that this beacon packet is valid (step S3); if it is not identical (NO in step S2), the beacon validity decision unit 405 decides that the beacon packet is invalid (step S4).

If no train formation number is recorded in the train formation number recording unit 404 in step S1 (NO in step S1), the beacon validity decision unit 405 decides whether or not a train formation number, a car-number, and an operating time can be extracted from the received beacon packet (that is, whether or not condition 3 is satisfied) (step S5). If they cannot be extracted (NO in step S5), the beacon validity decision unit 405 decides that the beacon packet is invalid (step S6). Owing to this decision, beacon packets transmitted from wireless devices not belonging to the train communication system can be recognized as invalid ones and excluded from those to be processed by the wireless slave device. If condition 3 is satisfied (YES in step S5), that is, if it is decided that a train formation number, a car-number, and an operating time can be extracted from the received beacon packet, the beacon validity decision unit 405 decides whether or not the time difference between the operating time of the wireless master device stored in the beacon packet and the operating time of the wireless slave device as the own device, which can be obtained from the operating time measurement unit 403, is shorter than a predetermined operating-time-difference's reference value, that is, whether or not condition 4 is satisfied (step S7), and decides that the beacon packet is invalid if the time difference is equal to or greater than the operating-time-difference's reference value (step S8).

The wireless slave devices and wireless master devices installed in each car of the same railroad train are supplied with power from the same power line, so it is conceivable that their power is switched on simultaneously. It is therefore conceivable that there are little differences among the startup times and operating times of the wireless slave devices and wireless master devices installed in each car of the same railroad train. At railroad stations, railroad yards, and other locations where a lot of railroad trains are crowded together, it is difficult to distinguish between beacon packets transmitted from the wireless master devices installed in the cars of the railroad train 100 in which the own device is installed and beacon packets transmitted from the wireless master devices installed in the cars of other railroad trains located close by, but it is conceivable that in different railroad trains times at power supply is started can be expected to be different from each other. The operating times of the wireless slave devices installed in the railroad train 100 can therefore be expected to differ from the operating times of the wireless master devices installed in other railroad trains by comparatively large amounts. Accordingly, if a time difference between the operating time of a wireless master device and the operating time of a wireless slave device is a predetermined operating-time-difference's reference value or more, it can be determined that the wireless slave device and wireless master device are mounted in different railroad trains. Even the wireless master devices and wireless slave devices mounted in the same railroad train, however, may differ slightly in their operating times because of variations in the starting times of their time measurement circuits, delays occurring in transmitting the operating time from the wireless master device to the wireless slave device, and so on. It is preferable that the predetermined operating-time-difference's reference value be set at the expected maximum value of the anticipated time difference between the wireless master devices and the wireless slave devices mounted in the same railroad train, or a value slightly larger than the expected maximum value.

If condition 4 is satisfied (YES in step S7), that is, if the time difference between the operating time of the wireless master device stored in the beacon packet and the operating time of the own device that can be obtained from the operating time measurement unit 403 is decided to be shorter than the predetermined operating-time-difference's reference value, the beacon validity decision unit 405 decides whether or not the received signal strength measured by the received-signal-strength measurement unit 406 is stronger than a predetermined received-signal-strength's reference value (that is, whether or not condition 5 is satisfied)(step S9), and if it is stronger than the predetermined received-signal-strength's reference value (YES in step S9), decides that the beacon packet is valid, notifies the train formation number recording unit 404 of the train formation number stored in the beacon packet, and has the train formation number recording unit 404 record the train formation number.

The wireless slave device does not receive only beacon packets transmitted by the wireless master devices installed in the same railroad train; there is the possibility that it may receive beacon packets transmitted from the wireless master devices installed in the cars of railroad trains (formation) located nearby in places such as railroad stations and railroad yards where a lot of railroad trains are crowded together. However, the received signal strengths of beacon packets transmitted from wireless master unit installed in the same car is expected to be constantly high value, because there are no large obstacles that obstruct radio wave propagation and the transmission distance is also fixed and comparatively short. However, the received signal strengths of beacon packets transmitted from the wireless master devices installed in the cars of nearby railroad trains is expected to be low value, because the cars themselves are obstacles that obstruct radio wave propagation and the transmission distance is not constant and comparatively long. Therefore, both beacon packets are distinguishable from each other. The received-signal-strength's reference value is a threshold value for distinguishing both beacon packets and is preferably the worst-case value of the received signal strength anticipated when the wireless slave device receives a beacon packet from the wireless master device installed in the same car, or a value close to the worst-case value.

### <Received-signal-strength Measurement Unit 406 in Wireless Slave Device>

The received-signal-strength measurement unit 406 in the wireless slave device measures the received signal strength of the radio waves received by the wireless communication unit 402 from the wireless master devices, and outputs the measured values. To be specific, the received-signal-strength measurement unit 406 extracts the train formation number and car-number from a beacon packet received by the wireless communication unit 402, and measures the received signal strength of the beacon packet. Since beacon packets are in general transmitted repeatedly, their received signal strengths may be measured several times to obtain their average value.

FIG. 7 is a diagram showing, in table form, an example of measured values of the received signal strengths of a plurality of beacon packets received at installation position (intra-car slave device's position) A at the front side of the car of car No. 3. FIG. 7 shows examples of received signal strengths measured by the wireless slave device 231 at installation position A, close to the wireless master device 131 installed in the same car. Since the wireless slave device 231 is extremely close to the wireless master device 131 likewise installed in the car of car No. 3, the received signal strength of the beacon packets transmitted by the wireless master device 131 is comparatively strong and -35 dBm.

In general, the received signal strength becomes weaker the farther apart the communicating wireless devices are, and is weakened by the presence of obstacles that obstruct radio wave propagation between the communicating wireless devices. In the case of communication between two wireless devices that are not both installed in the same car but are installed in different cars, the received signal strength is weakened because the walls and the like, which are structural members of the cars, are obstacles that obstruct radio wave propagation. In the example shown in FIG. 7, the received signal strengths of the beacon packets transmitted by the wireless master devices 121 and the wireless master devices 141 in the adjacent cars of car No. 2 and car No. 4 are -68 dBm and -78 dBm, respectively, and both of them are weaker than the received signal strength of the beacon packets transmitted by the wireless master device 131 installed in the car of car No. 3. Furthermore, the received signal strengths of the beacon packets transmitted by the wireless master device 111 in the car of car No. 1 and the wireless master device 151 in the car of car No. 5, which are comparatively distant from the wireless slave device 231, are still weaker and are -92 dBm and -90 dBm, respectively.

FIG. 8 is a diagram showing, in table form, an example of measured values of the received signal strengths of a plurality of beacon packets received at installation position (intra-car slave device's position) D at the back side in the car of car No. 3. The wireless slave device 234 at installation position D is farther from the wireless master device in the same car than the wireless slave device 231 in installation position A. Since the wireless slave device 234 is at some distance from the wireless master device 131 likewise installed in the car of car No. 3, the received signal strength of the beacon packets transmitted by the wireless master device 131 is -50 dBm, which is less than the measurement result shown in FIG. 7 for the wireless slave device 231. Since the installation position D of the wireless slave device 234 in the car is close to the car of car No. 4, the received signal strength of the beacon packets from the wireless master device 141 installed in the car of car No. 4 is -53 dBm, which is stronger than the measurement result obtained by the wireless slave device 231 in FIG. 7.

The result is that, in the wireless slave device 231 in installation position A, the received signal strength of the beacon transmitted from the wireless master device 131 likewise installed in the car of the same car No. 3 differs by 30 dbm or more from the received signal strengths of beacon transmitted by other wireless master devices, and it is easy to distinguish them. On the other hand, in the wireless slave device 234 at installation position D, a difference between the received signal strength of the beacon transmitted from the wireless master device 131 likewise installed in the car of the same car No. 3 differs by only 3 dbm from the received signal strength of the beacon transmitted by the wireless master device 141 installed in the adjacent car of car No. 4, and it is difficult to distinguish them.

### <Received-signal-strength Predicted-value Provision Unit 407 in Wireless Slave Device>

The received-signal-strength predicted-value provision unit 407 in the wireless slave device provides predicted values of the received signal strengths of beacon packets transmitted from each wireless master device in the railroad train 100 at each installation position of the wireless slave device. For example, the received-signal-strength predicted-value provision unit 407 provides a first predicted value that is a predicted value of a received signal strength of a network management packet transmitted from a wireless master device installed in the same car as the wireless slave device as the own device, and second predicted values that are predicted values of received signal strengths of the network management packets transmitted from wireless master devices installed in cars disposed in front and back of the car in which the wireless slave device as the own device is installed. FIG. 9 is a diagram showing, in table form, an example of predicted values of the received signal strengths of a plurality of beacon packets received by a wireless slave device installed at installation position (intra-car slave device's position) A in a certain car (e.g., the car of car No. N). FIG. 10 is a diagram showing, in table form, an example of predicted values of the received signal strengths of a plurality of beacon packets received by a wireless slave device installed at installation position (intra-car slave device's position) D in the certain car (e.g., the car of car No. N). In both the predicted values of the received signal strengths at installation position A shown in FIG. 9 and the predicted values of the received signal strengths at installation position D shown in FIG. 10, the received signal strength of the beacon packets transmitted from the wireless master device in the car in which the own device is installed is the strongest. However, any of the received signal strengths of the beacon packets transmitted from the wireless master device in the car in which the own device is installed and the received signal strengths of the beacon packets transmitted from the wireless master devices installed in other cars, differ depending on the installation position of the wireless slave device in the car. The predicted values of the received signal strengths provided by the received-signal-strength predicted-value provision unit 407 may be held in the received-signal-strength predicted-value provision unit 407 in advance. In that case, predicted values of the received signal strengths are prepared for each wireless slave device installation positions A to H. The received-signal-strength predicted-value provision unit 407 selects the predicted values of the received signal strengths on the basis of the installation position information recognized by the installation position recognition unit 401, and provides the selected ones. The relation between a position of the wireless master device installed in a certain car and installation positions A to H is a fixed relation determined by the structure of the car. For example, there are expected to be substantially no differences in the distance and wireless transmission path (the positions of surrounding walls and windows, the radio wave reflectance of the walls, and so on) between the wireless master device and the wireless slave device disposed at installation position A in each car in the same railroad train. Accordingly, if the received signal strengths are measured at each installation position in advance, it is conceivable that the actual measured values will be close to the values (predicted values) obtained by the advance measurements.

In addition, the server 106 may hold the predicted values of the received signal strengths provided by the received-signal-strength predicted-value provision unit 407, send them to the wireless master devices through the inter-car communication network 107, and the wireless master device may place them in the beacon packets to transmit the beacon packets to the wireless slave device. In this case as well, predicted values of the received signal strengths are prepared for each of wireless slave device installation positions A to H, and the received-signal-strength predicted-value provision unit 407 selects the predicted values of the received signal strengths on the basis of the installation position information recognized by the installation position recognition unit 401, and provides the selected one.

If the railroad train 100 includes cars of different types, it is conceivable that there may be differences in the methods of installation of the wireless master devices and wireless slave devices, in the distances between them, in the material of the car walls that obstruct wireless transmission, and the positions and sizes of glass windows. That is, with different types of cars, the strengths of the received signals transmitted between the wireless master device and wireless slave device may vary. It is therefore necessary to prepare predicted values of the received signal strengths that depend on the type of car. However, if there are a lot of different types of cars in which the wireless master devices and wireless slave devices may be installed the data size of the predicted values of the received signal strengths becomes large, requiring the mounting of much memory in the wireless slave devices, which increases their manufacturing cost. If, however, the predicted values of the received signal strengths corresponding to the different types of cars are held in the server 106 and distributed to the wireless slave devices via the wireless master devices, the need to install large amounts of memory in the wireless slave devices is eliminated and their manufacturing cost can be reduced. Moreover, even in a case of a new type of cars developed after the time of manufacturing of the wireless slave device, by storing in the server 106 predicted values of the received signal strengths in the new type car and distributing the predicted values, the wireless slave device can provide predicted values of the received signal strengths corresponding to the new type car and thus forward compatibility can be ensured.

### <Connection-destination-wireless-master-device Determination Unit 408 in Wireless Slave Device>

The connection-wireless-master-device determination unit 408 in a wireless slave device infers which the wireless master device is installed in the same car in which the wireless slave device itself is installed, and designates the wireless master device as the wireless master device with which to connect in order to configure a local wireless network. Since the predicted values of the received signal strengths provided by the received-signal-strength predicted-value provision unit 407 indicate the predicted values of the received signal strengths of the beacon packets transmitted from the wireless master devices installed in the car in which the wireless slave device is installed and in the cars positioned in front of and behind it, the connection-wireless-master-device determination unit 408 can infer the car in which the wireless slave device itself is installed by comparing with the measured values of the received signal strengths measured by the received-signal-strength measurement unit 406.

The method of comparing the measured values of the received signal strengths and the predicted values of the received signal strengths is not particularly limited. In the present embodiment, cars in which the wireless slave device might be installed are taken from among the cars in which the wireless master devices from which beacon packets were received are installed, the squares of the differences between the measured value of the received signal strength and the predicted value of the received signal strength are taken for each of five cars which include the car in which the wireless slave device is assumed to be installed and the two preceding and two following cars, and the sums of squared differences (residual sum of squares) that are the sums of the squares of the differences are compared with each other. If the sum of squared differences between the measured values of the received signal strength and the predicted values of the received signal strength is smallest, the car in which the wireless slave device is assumed to be installed is inferred to be the car in which the wireless slave device is actually installed. In addition, for example, the connection-wireless-master-device determination unit 408 arranges the measured values obtained by the received-signal-strength measurement unit 406 in the order indicated by the car-number information, which indicates the order of the cars and is included in the network management packet, compares the measured values with the first and second predicted values provided from the received-signal-strength predicted-value provision unit, thereby generating differences between the measured values and the first and second predicted values for each car, recognizes a car designated by a difference which is smallest in the generated differences, as a wireless cell in which the own device is installed, and designates a wireless master device inferred to be installed in the wireless cell as the wireless master device with which the own device should connect.

First, a case in which the wireless slave device is installed at installation position A will be described. FIG. 11 is a diagram showing, in table form, predicted values (estimated values) of the received signal strengths of a plurality of beacon packets received by a wireless slave device installed at installation position (intra-car slave device's position) A in the car of car No. 1, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position A are the measured values of the received signal strengths at installation position A shown in FIG. 7; the predicted values are the predicted values of the received signal strengths at installation position A shown in FIG. 9. Furthermore, the received signal strength of beacon packets from the wireless master devices in cars from which no beacon packets cannot be received is assumed to be -100 dBm. In a case of general wireless LAN devices, the minimum reception sensitivity is about -95 dBm; at lower reception sensitivities it becomes impossible to distinguish the received signal and noise. For computational reasons, values below the minimum reception sensitivity are assumed to be -100 dBm. The sum of the squares of the differences in this case is '8493'.

FIG. 12 is a diagram showing, in table form, predicted values (estimated values) of the received signal strengths of a plurality of beacon packets received by a wireless slave device installed at installation position (intra-car slave device's position) A in the car of car No. 2, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position A are the measured values of the received signal strengths at installation position A shown in FIG. 7; the predicted values are the predicted values of the received signal strengths at installation position A shown in FIG. 9. The sum of the squares of the differences in this case is '3917'.

FIG. 13 is a diagram showing, in table form, predicted values (estimated values) of the received signal strengths of a plurality of beacon packets received by a wireless slave device installed at installation position (intra-car slave device's position) A in the car of car No. 3, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position A are the measured values of the received signal strengths at installation position A shown in FIG. 7; the predicted values are the predicted values of the received signal strengths at installation position A shown in FIG. 9. The sum of the squares of the differences in this case is '67'.

FIG. 14 is a diagram showing, in table form, predicted values (estimated values) of the received signal strengths of a plurality of beacon packets received by a wireless slave device installed at installation position (intra-car slave device's position) A in the car of car No. 4, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position A are the measured values of the received signal strengths at installation position A shown in FIG. 7; the predicted values are the predicted values of the received signal strengths at installation position A shown in FIG. 9. The sum of the squares of the differences in this case is '4263'.

FIG. 15 is a diagram showing, in table form, predicted values (estimated values) of the received signal strengths of a plurality of beacon packets received by a wireless slave device installed at installation position (intra-car slave device's position) A in the car of car No. 5, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position A are the measured values of the received signal strengths at installation position A shown in FIG. 7; the predicted values are the predicted values of the received signal strengths at installation position A shown in FIG. 9. The sum of the squares of the differences in this case is '7339'.

FIG. 16 is a diagram showing, in table form, the sums of the squares of the differences obtained as a result of the comparison between the measured values of the received signal strengths and the predicted values of the received signal strengths shown in FIG. 11 to FIG. 15. From the results shown in FIG. 16, since the sum of the squares of the differences is smallest if the own device is assumed to be installed in the car of car No. 3, the connection-wireless-master-device determination unit 408 infers that the own device is mounted in the car of car No. 3. On the basis of this inference result, the connection-wireless-master-device determination unit 408 notifies the connection processor 409 of an inference-installation-car in which the own device is inferred to be installed.

Next, the case in which the wireless slave device is installed at installation position D will be described. FIG. 17 is a diagram showing, in table form, predicted values (estimated values) of the received signal strengths of a plurality of beacon packets received by a wireless slave device installed at installation position (intra-car slave device's position) D in the car of car No. 1, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position D are the measured values of the received signal strengths at installation position D shown in FIG. 8; the predicted values are the predicted values of the received signal strengths at installation position D shown in FIG. 10. The sum of the squares of the differences in this case is '5840'.

FIG. 18 is a diagram showing, in table form, predicted values (estimated values) of the received signal strengths of a plurality of beacon packets received by a wireless slave device installed at installation position (intra-car slave device's position) D in the car of car No. 2, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position D are the measured values of the received signal strengths at installation position D shown in FIG. 8; the predicted values are the predicted values of the received signal strengths at installation position D shown in FIG. 10. The sum of the squares of the differences in this case is '3099'.

FIG. 19 is a diagram showing, in table form, predicted values (estimated values) of the received signal strengths of a plurality of beacon packets received by a wireless slave device installed at installation position (intra-car slave device's position) D in the car of car No. 3, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position D are the measured values of the received signal strengths at installation position D shown in FIG. 8; the predicted values are the predicted values of the received signal strengths at installation position D shown in FIG. 10. The sum of the squares of the differences in this case is '133'.

FIG. 20 is a diagram showing, in table form, predicted values (estimated values) of the received signal strengths of a plurality of beacon packets received by a wireless slave device installed at installation position (intra-car slave device's position) D in the car of car No. 4, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position D are the measured values of the received signal strengths at installation position D shown in FIG. 8; the predicted values are the predicted values of the received signal strengths at installation position D shown in FIG. 10. The sum of the squares of the differences in this case is '2059'.

FIG. 21 is a diagram showing, in table form, predicted values (estimated values) of the received signal strengths of a plurality of beacon packets received by a wireless slave device installed at installation position (intra-car slave device's position) D in the car of car No. 5, the car-numbers of the cars in which the wireless master devices that transmit the beacon packets are installed, measured values (actual measured values) of the received signal strengths, the differences (absolute values) between the predicted and measured values, the squares of the differences, and the sum of the squares of the differences (the residual sum of squares). The values measured at installation position D are the measured values of the received signal strengths at installation position D shown in FIG. 8; the predicted values are the predicted values of the received signal strengths at installation position D shown in FIG. 10. The sum of the squares of the differences in this case is '6603'.

FIG. 22 is a diagram showing, in table form, the sum of the squares of the differences obtained as a comparison result of the measured values of the received signal strengths and the predicted values of the received signal strengths shown in FIG. 17 to FIG. 21. From the results shown in FIG. 22, since the sum of the squares of the differences is smallest if the own device is assumed to be installed in the car of car No. 3, the connection-wireless-master-device determination unit 408 infers that the own device is mounted in the car of car No. 3. On the basis of this inference result, the connection-wireless-master-device determination unit 408 notifies the connection processor 409 of the inference-installation-car.

FIG. 23 concerns a comparative example and is a diagram showing, in table form, the sum of the squares of the differences (the residual sum of squares) between predicted values of the received signal strengths of a plurality of beacon packets received by a wireless slave device installed at installation position (intra-car slave device's position) D in the car of car No. 3 and measured values of the received signal strengths of a plurality of beacon packets received by a wireless slave device installed at installation position (intra-car slave device's position) A in the car of car No. 3. The situation shown in FIG. 23 could arise if the sum of the squares of the differences was calculated using predicted values in which the intra-car slave device's position is not taken account of.

Furthermore, FIG. 24 concerns a comparative example and is a diagram showing, in table form, the sum of the squares of the differences between predicted values of the received signal strengths of a plurality of beacon packets received by a wireless slave device installed at installation position (intra-car slave device's position) D in the car of car No. 2 and measured values of the received signal strengths of a plurality of beacon packets received by a wireless slave device installed at installation position (intra-car slave device's position) A in the car of car No. 2. The situation shown in FIG. 24 could arise if the sum of the squares of the differences was calculated using predicted values that did not take account of the intra-car slave device's position.

FIG. 25 concerns a comparative example and is a diagram showing, in table form, the sum of the squares of the differences (the residual sum of squares) between the predicted values of the received signal strengths of the plurality of beacon packets received by the wireless slave devices installed at installation position (intra-car slave device's position) D in the cars of car No. 3 and car No. 2 and the measured values of the received signal strengths of the plurality of beacon packets received by the wireless slave devices installed at installation position (intra-car slave device's position) A in the cars of car No. 3 and car No. 2. FIG. 25 shows the sums of the squares of the differences obtained as the comparison result of the measured values of the received signal strengths and the predicted values of the received signal strengths shown in FIG. 23 and FIG. 24. In the destination-wireless-master-unit determination unit 408, the sum of the squares of the differences is '967' if it is assumed that the own device is installed in the car of car No. 3 as shown in FIG. 23, and the sum of the squares of the differences is '1117' if it is assumed that the own device is installed in the car of car No. 2 as shown in FIG. 24. As shown in FIG. 16 and FIG. 22, in the present embodiment, since predicted values of the received signal strengths that match the installation position of the wireless slave device in the car are used, the sum of the squares of the differences is a remarkably small value for the car of car No. 3 in comparison with that for the other cars, and it is easy to select the car of car No. 3 as the inference-installation-car. However, in the comparative example shown in FIG. 23 to FIG. 25, the obtained sums of the squares of the differences are extremely close in value, so it is difficult to make an accurate selection of the inference-installation-car; and a situation in which the wrong car could be inferred is often happened. In this way, in the present invention, by giving predicted values of the received signal strengths based on the installation position of the wireless slave device in the car, the present embodiment can improve the inference accuracy of the car in which the wireless slave device is installed can be improved.

### <Connection Processor 409 in Wireless Slave Device>

The connection processor 409 in a wireless slave device performs processing for sending the connection-destination wireless master device a connection request that is addressed to the connection-destination wireless master device determined by the connection-wireless-master-device determination unit 408, and thereby joins the local wireless network to which the connection-destination wireless master device belongs.

### <Effects of the Embodiment>

Simply selecting a wireless master device with which to connect from among a plurality of wireless master devices on the basis of the received signal strengths of the plurality of beacon packets transmitted from the plurality of wireless master devices, sometimes leads to a connection with a wireless master device with which not to connect originally. However, in the present embodiment, the received signal strengths from the wireless master devices installed at each position (intra-communication-system car's position) in the communication system is compared with the predicted values which is predicted when it received at the intra-cell position (intra-car slave device's position) of the wireless slave device, the car in which the wireless slave device is installed (intra-communication-system car's position) is inferred on the basis of the result of this comparison, and the wireless master device installed in this car is identified as connection-destination wireless master device. Further, since the wireless master device is generally installed in a designated position in each car, notification of the car-number as the installation position of the wireless master device can eliminate the need for sending each wireless slave device a large data amount of positional information.

In addition, in the present embodiment, since the positional information of the wireless master device in the present embodiment is indicated by the car-number, the table of predicted values of received signal strengths held in the received-signal-strength predicted-value provision unit 407 can also be simplified.

Furthermore, since the cars are arranged in a single line in the railroad train 100, the received strengths from the wireless master devices installed in each car decrease with increasing distance from the car-number of the car in which the wireless slave device is installed. For this reason, in the present embodiment, it is possible for a wireless slave device to infer the car-number of the car in which a wireless master device is installed from the received signal strength.

Moreover, in the present embodiment, since the positions of the wireless master devices in the cars are fixed and the position of a wireless slave device in a car can be recognized, the distance between the wireless slave device and the wireless master device in the same car, the wireless slave device or the wireless master devices installed in the adjacent cars have fixed values. For this reason, in the present embodiment, the measured values of the received signal strengths can be predicted, with the result that the wireless master device installed in the same car can be identified and the wireless master device with which to connect can be determined.

Furthermore, if the wireless slave device holds a table indicating the predicted values of the received signal strengths at each intra-car position, even if the intra-car position of the wireless slave device is changed, it can use the predicted values of the received signal strengths at the installation position after the change and can properly determine the wireless master device with which to connect.

Alternatively, if the wireless slave device receives from the wireless master device the table indicating predicted values of the received signal strengths at each intra-car slave device's position, even if a situation where a pattern of intra-wireless-cell slave device's positions which is not held in the wireless slave device is added arises, the wireless slave device can obtain the predicted values of the received signal strengths and can determine the wireless master device with which to connect.

In addition, in the train system, it is anticipated that power will be turned on at the same time in cars of the same railroad train. Therefore, it is conceivable that the wireless master device and wireless slave devices installed in the same car will be powered on simultaneously and their operating times will be substantially equal. In different railroad trains, however, it can be anticipated that the power-on timings are different. Now we suppose a situation in which other railroad trains each with a communication system mounted thereon are located nearby, in a railroad yard or the like. In such a situation, depending on positional relationship between the railroad trains, there is a possibility that a wireless slave device may receive network management packets from a wireless master device installed in the other railroad trains, but by checking the operating time information, the wireless slave device can determine whether they come from a wireless master device installed in the railroad train in which the own device is installed or a wireless master device in the other railroad trains. Consequently, the wireless slave device hardly makes a mistake in selection of the wireless master device with which to connect.

Further, since the wireless slave device includes the train formation number recording unit for recording the train formation number and car-number, once the train formation number and car-number are determined, the wireless slave device can make a connection request to the wireless master device by using the train formation number and car-number recorded in the train formation number recording unit beforehand, if the local wireless network is reconfigured. In this case, the wireless slave device can connect to the wireless master device with which to connect quickly and correctly, without performing the process of inferring the wireless master device with which to connect.

In addition, if a power in the car is shut off, there is a possibility that the wireless master device or the wireless slave device may be shifted to another car during the power shutdown, and therefore it is required to infer and determine the wireless master device with which to connect again when the power is turned on. Therefore, when power is shut off, the information recorded in the railroad train formation number recording unit is deleted. Therefore, by deleting the recorded information when the power is shut off, the wireless slave device can correctly determine the wireless master device with which to connect, even if the installation position of the wireless master device or the installation position of the wireless slave device shifts.

### <Variation>

When there are no other railroad trains around a railroad train equipped with a communication system to which the present invention is applied, the wireless master device selection method can be carried out without the operating time measurement device 403 of the wireless slave device and the operating time measurement unit 303 of the wireless master device.

### DESCRIPTION OF REFERENCE CHARACTERS

100 railroad train; 101 car of car No. 1 (wireless cell); 102 car of car No. 2 (wireless cell); 103 car of car No. 3 (wireless cell); 104 car of car No. 4 (wireless cell); 105 car of car No. 5 (wireless cell); 106 server; 107 inter-car network; 110, 120, 130, 140, 150 local wireless network; 111, 121, 131, 141, 151 wireless master device; 221 to 228, 231 to 238, 241 to 248 wireless slave device; 301 inter-car network communication unit; 302 installation-car-information acquisition unit; 303 operating time measurement unit; 304 beacon generator; 305 wireless communication unit; 306 connection acceptance processor; 401 installation position recognition unit; 402 wireless communication unit; 403 operating time measurement unit; 404 train formation number recording unit; 405 beacon validity decision unit; 406 received-signal-strength measurement unit; 407 received-signal-strength predicted-value provision unit; 408 connection-wireless-master-device determination unit; 409 connection processor; A to H intra-car slave device's position (intra-wireless-cell slave device's position).

## Claims

1. A communication system comprising a plurality of local wireless networks corresponding to a predetermined plurality of wireless cells,
each local wireless network in the plurality of local wireless networks (110, 120, 130, 140, 150) including a wireless master device (111; 121; 131; 141; 151) and at least one wireless slave device that are installed in each wireless cell (101, 102, 103, 104, 105) of the plurality of wireless cells (101, 102, 103, 104, 105),
wherein the wireless slave device includes:
a wireless communication unit (402) for receiving a plurality of network management packets transmitted by a plurality of wireless master devices (111, 121, 131, 141, 151) corresponding to the plurality of wireless cells (101, 102, 103, 104, 105);
an installation position recognition unit (401) for obtaining information indicating an intra-wireless-cell slave device's position which is an installation position of the wireless slave device in the wireless cell (101; 102; 103; 104; 105), in which the wireless slave device is installed, of the plurality of wireless cells (101, 102, 103, 104, 105);
a received-signal-strength measurement unit (406) for obtaining , from the plurality of network management packets, information indicating intra-communication-system cell positions that are positions, in the communication system, of the plurality of wireless cells (101, 102, 103, 104, 105) in which each wireless master device (111, 121, 131, 141, 151) of the plurality of wireless master devices (111, 121, 131, 141, 151) are installed, of the plurality of wireless cells (101, 102, 103, 104, 105) and obtaining, in association with the information each indicating the intra-communication-system cell positions, measured values of received signal strengths of the plurality of network management packets;
a received-signal-strength predicted-value provision unit (407) for providing predicted values of the received signal strengths of the plurality of network management packets at the intra-wireless-cell slave device's position;
a connection-wireless-master-device determination unit (408) for performing a comparison of the predicted values provided by the received-signal-strength predicted-value provision unit (407) with the measured values obtained by the received-signal-strength measurement unit (406), and designating, as a connection-destination wireless master device to be connected by the wireless slave device, a wireless master device inferred, on a basis of a result of the comparison, installed in the wireless cell (101; 102; 103; 104; 105) in which the wireless slave device is installed; and
a connection processor (409) for carrying out processing to connect with the connection-destination-wireless master device designated by the connection-wireless-master-device determination unit (408).

2. The communication system of claim 1, wherein the plurality of wireless cells (101, 102, 103, 104, 105) are a plurality of cars forming a railroad train (100).

3. The communication system of claim 2, wherein
each of the network management packets includes car-number information indicating a car-number assigned to each car of the plurality of cars, the car-number assigned to each car indicating order of each car of the plurality of cars in the railroad train formed by an array of the plurality of cars, and
the car-number indicated by the car-number information included in a network management packet is a car-number assigned to a car in which a wireless master device as a transmission source transmitting the network management packet is installed.

4. The communication system of claim 3, wherein
the received-signal-strength predicted-value provision unit (407) provides
a first predicted value that is a predicted value of a received signal strength of a network management packet transmitted from a wireless master device installed in the same car as the wireless slave device, and
second predicted values that are predicted values of received signal strengths of the network management packets transmitted from wireless master devices installed in cars disposed in front and back of the car in which the wireless slave device is installed.

5. The communication system of claim 4, wherein the connection-wireless-master-device determination unit (408) is adapted to
arrange the measured values obtained by the received-signal-strength measurement unit (406) in the order indicated by the car-number information, which indicates the order of the cars and is included in the network management packet,
compare the measured values with the first and second predicted values provided from the received-signal-strength predicted-value provision unit (407), thereby generating differences between the measured values and the first and second predicted values for each car,
recognize a car designated by a difference which is smallest in the generated differences, as a wireless cell (101; 102; 103; 104; 105) in which the wireless slave device is installed, and
designate a wireless master device inferred installed in the wireless cell (101; 102; 103; 104; 105) as the wireless master device with which the wireless slave device should connect.

6. The communication system of any one of claims 1 to 5, wherein the received-signal-strength predicted-value provision unit (407) is adapted to
hold in advance a table of the predicted values of the received signal strengths of the plurality of network management packets at a plurality of candidate installation positions of the wireless slave device in the wireless cell (101; 102; 103; 104; 105), and
select the measured values to be used in the comparison with the measured value from the table of the predicted values on a basis of the intra-wireless-cell slave device's position obtained by the installation position recognition unit (401) to supply the selected measured values.

7. The communication system of any one of claims 1 to 5, wherein the received-signal-strength predicted-value provision unit (407) is adapted to
obtain a table of the predicted values of the received signal strengths of the plurality of network management packets at a plurality of candidate installation positions of the wireless slave device in the wireless cell (101; 102; 103; 104; 105) from the plurality of network management packets, and
select the measured values to be used in the comparison with the measured values from the table of the predicted values on a basis of the intra-wireless-cell slave device's position obtained by the installation position recognition unit to supply the selected measured values.

8. The communication system of any one of claims 1 to 7, wherein the wireless slave device further includes:
a slave-device-operating-time measurement unit (403) for measuring a slave device's operating time which is an elapsed time from a time of power-on of the wireless slave device; and
a beacon validity decision unit (405) for extracting master device's operating times which are operating times of the plurality of wireless master devices and are included in the plurality of network management packets;
wherein the received-signal-strength measurement unit (406) is adapted to,
if a time difference between the slave device's operating time and the master device's operating time is less than a predetermined reference time difference, measure the received signal strengths of the network management packets from which the master device's operating times are extracted.

9. The communication system of claim 2, wherein
the wireless slave device further includes a train formation number recording unit (404) for recording a train formation number and a car-number,
the train formation number recording unit (404) is adapted to
store the train formation number and the car-number stored in the network management packets transmitted by the connection-destination wireless master device, and
if the wireless slave device is powered off, lose recorded data.

10. The communication system of claim 9, wherein the wireless slave device further includes:
a slave-device-operating-time measurement unit (403) for measuring a wireless slave device's operating time which is an elapsed time from a time of power-on of the wireless slave device; and
a beacon validity decision unit (405) for extracting wireless master device's operating times included in the plurality of network management packets;
the received-signal-strength measurement unit (406) is adapted to,
if the train formation number and the car-number are not stored in the train formation number recording unit (404) and a time difference between the slave device's operating time and the master device's operating time is less than a predetermined reference time difference, measure the received signal strengths of the network management packets from which the master device's operating times are extracted.

11. A wireless slave device included in a communication system including a plurality of local wireless networks corresponding to a predetermined plurality of wireless cells (101, 102, 103, 104, 105),
wherein each local wireless network in the plurality of local wireless networks includes a wireless master device (111; 121; 131; 141; 151) and at least one wireless slave device that are installed in each wireless cell in the plurality of wireless cells (101, 102, 103, 104, 105),
the wireless slave device comprising:
a wireless communication unit (402) for receiving a plurality of network management packets transmitted by a plurality of wireless master devices corresponding to the plurality of wireless cells (101, 102, 103, 104, 105);
an installation position recognition unit (401) for obtaining information indicating an intra-wireless-cell slave device's position which is an installation position of the wireless slave device in the wireless cell (101; 102; 103; 104; 105), in which the wireless slave device is installed, of the plurality of wireless cells (101, 102, 103, 104, 105);
a received-signal-strength measurement unit (406) for obtaining, from the plurality of network management packets, information indicating intra-communication-system cell positions that are positions, in the communication system, of the plurality of wireless cells (101, 102, 103, 104, 105) in which each wireless master device (111; 121; 131; 141; 151) of the plurality of wireless master devices (111, 121, 131, 141, 151) are installed, of the plurality of wireless cells (101, 102, 103, 104, 105) and obtaining, in association with the information each indicating the intra-communication-system cell positions, measured values of received signal strengths of the plurality of network management packets;
a received-signal-strength predicted-value provision unit (407) for providing predicted values of the received signal strengths of the plurality of network management packets at the intra-wireless-cell slave device's position;
a connection-wireless-master-device determination unit (408) for performing a comparison of the predicted values provided by the received-signal-strength predicted-value provision unit (407) with the measured values obtained by the received-signal-strength measurement unit (406), and designating, as a connection-destination wireless master device to be connected by the wireless slave device, a wireless master device inferred, from a result of the comparison, installed in the wireless cell in which the wireless slave device is installed; and
a connection processor (409) for carrying out processing to connect with the connection-destination-wireless master device designated by the connection-wireless-master-device determination unit (408).

12. The wireless slave device of claim 11, wherein the plurality of wireless cells (101, 102, 103, 104, 105) are a plurality of cars forming a railroad train (100).

13. A wireless master device selection method that is carried out by a wireless slave device included in a communication system including a plurality of local wireless networks corresponding to a predetermined plurality of wireless cells (101, 102, 103, 104, 105), wherein each local wireless network in the plurality of local wireless networks includes a wireless master device (111; 121; 131; 141; 151) and at least one wireless slave device that are installed in each wireless cell (101, 102, 103, 104, 105) in the plurality of wireless cells (101, 102, 103, 104, 105),
the wireless master device selection method comprising the steps of:
receiving a plurality of network management packets transmitted by the plurality of wireless master devices (111, 121, 131, 141, 151) corresponding to the plurality of wireless cells (101, 102, 103, 104, 105);
obtaining, by the wireless slave device, information indicating an intra-wireless-cell slave device's position which is an installation position of the wireless slave device in the wireless cell (101, 102, 103, 104, 105), in which the wireless slave device is installed, of the plurality of wireless cells (101, 102, 103, 104, 105);
obtaining, from the plurality of network management packets, information indicating intra-communication-system cell positions that are positions, in the communication system, of the plurality of wireless cells (101, 102, 103, 104, 105) in which each wireless master device (111, 121, 131, 141, 151) of the plurality of wireless master devices are installed, of the plurality of wireless cells (101, 102, 103, 104, 105) and obtaining, in association with the information each indicating the intra-communication-system cell positions, measured values of received signal strengths of the plurality of network management packets;
providing predicted values of the received signal strengths of the plurality of network management packets at the intra-wireless-cell slave device's position; and
performing a comparison of the provided predicted values with the obtained measured values, and designating, as a connection-destination wireless master device to be connected by the wireless slave device, a wireless master device inferred, from a result of the comparison, installed in the wireless cell (101; 102; 103; 104; 105) in which the wireless slave device is installed.

14. The wireless master device selection method of claim 13, wherein the plurality of wireless cells (101, 102, 103, 104, 105) are a plurality of cars forming a railroad train (100).

## Patentansprüche

1. Kommunikationssystem, umfassend eine Vielzahl von lokalen Funknetzwerken entsprechend einer vorherbestimmten Vielzahl von Funkzellen,
wobei jedes lokale Funknetzwerk in der Vielzahl von lokalen Funknetzwerken (110, 120, 130, 140, 150) eine Funkhaupteinrichtung (111; 121; 131; 141; 151) und zumindest eine Funknebeneinrichtung umfasst, die in jeder Funkzelle (101, 102, 103, 104, 105) der Vielzahl von Funkzellen (101, 102, 103, 104, 105) installiert sind,
wobei die Funknebeneinrichtung umfasst:
eine Funkkommunikationseinheit (402) zum Empfangen einer Vielzahl von Netzwerkverwaltungspaketen, die durch eine Vielzahl von Funkhaupteinrichtungen (111, 121, 131, 141, 151) entsprechend der Vielzahl von Funkzellen (101, 102, 103, 104, 105) übertragen werden;
eine Installationspositionserkennungseinheit (401) zum Erhalten von Informationen, anzeigend eine Intra-Funkzellen-Nebeneinrichtungsposition, welche eine Installationsposition der Funknebeneinrichtung in der Funkzelle (101; 102; 103; 104; 105) ist, in welcher die Funknebeneinrichtung installiert ist, der Vielzahl von Funkzellen (101, 102, 103, 104, 105);
eine empfangene-Signalstärke-Messeinheit (406) zum Erhalten, aus der Vielzahl von Netzwerkverwaltungspaketen, von Informationen, anzeigend Intra-Kommunikationssystem-Zellpositionen, die Positionen,
im Kommunikationssystem, der Vielzahl von Funkzellen (101, 102, 103, 104, 105) sind, in welchen jede Funkhaupteinrichtung (111, 121, 131, 141, 151) der Vielzahl von Funkhaupteinrichtungen (111, 121, 131, 141, 151) installiert sind, der Vielzahl von Funkzellen (101,102, 103, 104, 105) und Erhalten, in Verbindung mit den Informationen, jeweils anzeigend die Intra-Kommunikationssystem-Zellpositionen, von Messwerten von empfangenen Signalstärken der Vielzahl von Netzwerkverwaltungspaketen;
eine empfangene-Signalstärke-vorhergesagter-Wert-Bereitstellungseinheit (407) zum Bereitstellen von vorhergesagten Werten der empfangenen Signalstärken der Vielzahl von Netzwerkverwaltungspaketen an der Intra-Funkzellen-Nebeneinrichtungsposition;
eine Verbindung-Funkhaupteinrichtung-Bestimmungseinheit (408) zum Durchführen eines Vergleichs der vorhergesagten Werte, die durch die empfangene-Signalstärke-vorhergesagter-Wert-Bereitstellungseinheit (407) bereitgestellt wurden, mit den Messwerten, die durch die empfangene-Signalstärke-Messeinheit (406) erhalten wurden, und
Bestimmen, als eine Verbindungsziel-Funkhaupteinrichtung, die durch die Funknebeneinrichtung zu verbinden ist, einer geschlussfolgerten Funkhaupteinrichtung, auf einer Grundlage eines Ergebnisses des Vergleichs, die in der Funkzelle (101; 102; 103; 104; 105) installiert ist, in welcher die Funknebeneinrichtung installiert ist; und
einen Verbindungsprozessor (409) zum Durchführen von Verarbeitung, um sich mit der Verbindungsziel-Funkhaupteinrichtung, die durch die Verbindung-Funkhaupteinrichtung-Bestimmungseinheit (408) bestimmt wurde, zu verbinden.

2. Kommunikationssystem nach Anspruch 1, wobei die Vielzahl von Funkzellen (101, 102, 103, 104, 105) eine Vielzahl von Waggons sind, die einen Eisenbahnzug bilden.

3. Kommunikationssystem nach Anspruch 2, wobei
jedes der Netzwerkverwaltungspakete eine Waggonnummerinformation beinhaltet, anzeigend eine Waggonnummer, die jedem Waggon der Vielzahl von Waggons zugeordnet ist, wobei die jedem Waggon zugeordnete Waggonnummer Reihenfolge jedes Waggons der Vielzahl von Waggons im Eisenbahnzug anzeigt, der durch eine Anordnung der Vielzahl von Waggons gebildet ist, und
die Waggonnummer, die durch die in einem Netzwerkverwaltungspaket beinhaltete Waggonnummerinformation angezeigt ist, eine Waggonnummer ist, die einem Waggon zugeordnet ist, in welchem eine Funkhaupteinrichtung als eine Übertragungsquelle, übertragend das Netzwerkverwaltungspaket, installiert ist.

4. Kommunikationssystem nach Anspruch 3, wobei
die empfangene-Signalstärke-vorhergesagter-Wert-Bereitstellungseinheit (407) bereitstellt:
einen ersten vorhergesagten Wert, der ein vorhergesagter Wert einer empfangenen Signalstärke eines Netzwerkverwaltungspakets ist, das von einer Funkhaupteinrichtung, die im gleichen Waggon installiert ist wie die Funknebeneinrichtung, übertragen wurde, und
zweite vorhergesagte Werte, die vorhergesagte Werte von empfangenen Signalstärken der Netzwerkverwaltungspakete sind, die von in Waggons installierten Funkhaupteinrichtungen, die an der Vorderseite und Rückseite des Waggons angeordnet sind, in welchem die Funknebeneinrichtung installiert ist, übertragen werden.

5. Kommunikationssystem nach Anspruch 4, wobei die Verbindung-Funkhaupteinrichtung-Bestimmungseinheit (408) ausgelegt ist, um
die durch die empfangene-Signalstärke-Messeinheit (406) erhaltenen Messwerte in der Reihenfolge anzuordnen, die durch die Waggonnummerinformation angezeigt ist, welche die Reihenfolge der Waggons anzeigt und im Netzwerkverwaltungspaket enthalten ist,
die Messwerte mit den ersten und zweiten vorhergesagten Werten, die von der empfangene-Signalstärke-vohrergesagter-Wert-Bereitstellungseinheit (407) bereitgestellt wurden, zu vergleichen, um dadurch Differenzen zwischen den Messwerten und den ersten und zweiten vorhergesagten Werten für jeden Waggon zu generieren,
einen Waggon, der durch eine Differenz bestimmt ist, die in den generierten Differenzen am kleinsten ist, als eine Funkzelle (101; 102; 103; 104; 105) zu erkennen, in welcher die Funknebeneinrichtung installiert ist, und
eine geschlussfolgerte Funkhaupteinrichtung, die in der Funkzelle (101; 102; 103; 104; 105) installiert ist, als die Funkhaupteinrichtung zu bestimmen, mit welcher sich die Funknebeneinrichtung verbinden soll.

6. Kommunikationssystem nach einem der Ansprüche 1 bis 5, wobei die empfangene-Signalstärke-vorhergesagter-Wert-Bereitstellungseinheit (407) eingerichtet ist, um
im Voraus eine Tabelle der vorhergesagten Werte der empfangenen Signalstärken der Vielzahl von Netzwerkverwaltungspaketen an einer Vielzahl von Kandidateninstallationspositionen der Funknebeneinrichtung in der Funkzelle (101; 102; 103; 104; 105) bereitzuhalten, und
die im Vergleich mit dem Messwert aus der Tabelle der vorhergesagten Werte zu verwendenden Messwerte auszuwählen auf einer Grundlage der Intra-Funkzellen-Nebeneinrichtungsposition, die durch die Installationspositionserkennungseinheit (401) erhalten wurde, um die ausgewählten Messwerte bereitzustellen.

7. Kommunikationssystem nach einem der Ansprüche 1 bis 5, wobei die empfangene-Signalstärke-vorhergesagter-Wert-Bereitstellungseinheit (407) ausgelegt ist, um
eine Tabelle der vorhergesagten Werte der empfangenen Signalstärken der Vielzahl von Netzwerkverwaltungspaketen an einer Vielzahl von Kandidateninstallationspositionen der Funknebeneinrichtung in der Funkzelle (101; 102; 103; 104; 105) von der Vielzahl von Netzwerkkommunikationspaketen zu erhalten, und
die im Vergleich mit den Messwerten zu verwendenden Messwerte aus der Tabelle der vorhergesagten Werte auszuwählen auf einer Grundlage der Intra-Funkzellen-Nebeneinrichtungsposition, die durch die Installationspositionserkennungseinheit erhalten wurde, um die ausgewählten Messwerte bereitzustellen.

8. Kommunikationssystem nach einem der Ansprüche 1 bis 7, wobei die Funknebeneinrichtung ferner umfasst:
eine Nebeneinrichtungsbetriebszeitmesseinheit (403) zum Messen einer Nebeneinrichtungsbetriebszeit, welche eine abgelaufene Zeit ab einer Einschaltzeit der Funknebeneinrichtung ist; und
eine Beacon-Gültigkeitsentscheidungseinheit (405) zum Extrahieren von Haupteinrichtungsbetriebszeiten, welche Betriebszeiten der Vielzahl von Funkhaupteinrichtungen sind und in der Vielzahl von Netzwerkverwaltungspaketen enthalten sind;
wobei die empfangene-Signalstärke-Messeinheit (406) ausgelegt ist, um,
wenn eine Zeitdifferenz zwischen der Nebeneinrichtungsbetriebszeit und der Haupteinrichtungsbetriebszeit kleiner ist als eine vorherbestimmte Referenzzeitdifferenz, die empfangenen Signalstärken der Netzwerkverwaltungspakete, aus welchen die Haupteinrichtungsbetriebszeiten extrahiert werden, zu messen.

9. Kommunikationssystem nach Anspruch 2, wobei
die Funknebeneinrichtung ferner eine Zugbildungsnummeraufzeichnungseinheit (404) zum Aufzeichnen einer Zugbildungsnummer und einer Waggonnummer umfasst,
wobei die Zugbildungsaufzeichnungseinheit (404) eingerichtet ist, um
die Zugbildungsnummer und die Waggonnummer, die in den Netzwerkverwaltungspaketen gespeichert sind, die durch die Verbindungsziel-Funkhaupteinrichtung übertragen wurden, zu speichern, und falls die Funknebeneinrichtung ausgeschaltet ist, aufgezeichnete Daten zu verlieren.

10. Kommunikationssystem nach Anspruch 9, wobei die Funknebeneinrichtung ferner umfasst:
eine Nebeneinrichtungsbetriebszeitmesseinheit (403) zum Messen einer Betriebszeit einer Funknebeneinrichtung, welche eine abgelaufene Zeit ab einem Zeitpunkt des Anschaltens der Funknebeneinrichtung ist; und
eine Beacon-Gültigkeitsentscheidungseinheit (405) zum Extrahieren der Betriebszeiten der Funkhaupteinrichtung, die in der Vielzahl von Netzwerkverwaltungspaketen enthalten sind;
wobei die empfangene-Signalstärke-Messeinheit (406) ausgelegt ist, um
falls die Zugbildungsnummer und die Waggonnummer in der Zugbildungsnummeraufzeichnungseinheit (404) nicht gespeichert sind und eine Zeitdifferenz zwischen der Betriebszeit der Nebeneinrichtung und der Betriebszeit der Haupteinrichtung kleiner ist als eine vorherbestimmte Referenzzeitdifferenz, die empfangenen Signalstärken der Netzwerkverwaltungspakete zu messen, aus welchen die Betriebszeiten der Haupteinrichtung extrahiert werden.

11. Funknebeneinrichtung, die in einem Kommunikationssystem umfassend eine Vielzahl von lokalen Funknetzwerken entsprechend einer vorherbestimmten Vielzahl von Funkzellen (101, 102, 103, 104, 105), enthalten ist,
wobei jedes lokale Funknetzwerk in der Vielzahl von lokalen Funknetzwerken eine Funkhaupteinrichtung (111; 121; 131; 141; 151) und zumindest eine Funknebeneinrichtung umfasst, die in jeder Funkzelle in der Vielzahl von Funkzellen (101, 102, 103, 104, 105) installiert sind,
wobei die Funknebeneinrichtung umfasst:
eine Funkkommunikationseinheit (402) zum Empfangen einer Vielzahl von Netzwerkverwaltungspaketen, die durch eine Vielzahl von Funkhaupteinrichtungen entsprechend der Vielzahl von Funkzellen (101, 102, 103, 104, 105) übertragen werden;
eine Installationspositionserkennungseinheit (401) zum Erhalten von Informationen, anzeigend eine Intra-Funkzellen-Nebeneinrichtungsposition, welche eine Installationsposition der Funknebeneinrichtung in der Funkzelle (101; 102; 103; 104; 105) ist, in welcher die Funknebeneinrichtung installiert ist, der Vielzahl von Funkzellen (101, 102, 103, 104, 105);
eine empfangene-Signalstärke-Messeinheit (406) zum Erhalten, aus der Vielzahl von Netzwerkverwaltungspaketen, von Informationen, anzeigend Intra-Kommunikationssystem-Zellpositionen, die Positionen, im Kommunikationssystem, der Vielzahl von Funkzellen (101, 102, 103, 104, 105) sind, in welchen jede Funkhaupteinrichtung (111; 121; 131; 141; 151) der Vielzahl von Funkhaupteinrichtungen (111, 121, 131, 141, 151) installiert sind, der Vielzahl von Funkzellen (101, 102, 103, 104, 105) und Erhalten in Verbindung mit den Informationen, jeweils anzeigend die Intra-Kommunikationssystem-Zellpositionen, von Messwerten von empfangenen Signalstärken der Vielzahl von Netzwerkverwaltungspaketen;
eine empfangene-Signalstärke-vorhergesagter-Wert-Bereitstellungseinheit (407) zum Bereitstellen von vorhergesagten Werten der empfangenen Signalstärken der Vielzahl von Netzwerkverwaltungspaketen an der der Intra-Funkzellen-Nebeneinrichtungsposition;
eine Verbindung-Funkhaupteinrichtung-Bestimmungseinheit (408) zum Durchführen eines Vergleichs der vorhergesagten Werte, die durch die empfangene-Signalstärke-vorhergesagter-Wert-Bereitstellungseinheit (407) bereitgestellt wurden, mit den Messwerten, die durch die empfangene-Signalstärke-Messeinheit (406) erhalten wurden, und
Bestimmen, als eine Verbindungsziel-Funkhaupteinrichtung, die durch die Funknebeneinrichtung zu verbinden ist, einer geschlussfolgerten Funkhaupteinrichtung, aus einem Ergebnis des Vergleichs, die in der Funkzelle installiert ist, in welcher die Funknebeneinrichtung installiert ist, und
einen Verbindungsprozessor (409) zum Durchführen von Verarbeitung, um sich mit der Verbindungsziel-Funkhaupteinrichtung, die durch die Verbindung-Funkhaupteinrichtung-Bestimmungseinheit (408) bestimmt wurde, zu verbinden.

12. Funknebeneinrichtung nach Anspruch 11, wobei die Vielzahl von Funkzellen (101, 102, 103, 104, 105) eine Vielzahl von Waggons sind, die einen Eisenbahnzug (100) bilden.

13. Funkhaupteinrichtung-Auswahlverfahren, das durch eine Funknebeneinrichtung durchgeführt wird, die in einem Kommunikationssystem enthalten ist, umfassend eine Vielzahl von lokalen Funknetzwerken entsprechend einer vorherbestimmten Vielzahl von Funkzellen (101, 102, 103, 104, 105), wobei jedes lokale Funknetzwerk in der Vielzahl von lokalen Funknetzwerken eine Funkhaupteinrichtung (111; 121; 131; 141; 151) und zumindest eine Funknebeneinrichtung umfasst, die in jeder Funkzelle (101, 102, 103, 104, 105) in der Vielzahl von Funkzellen (101, 102, 103, 104, 105) installiert sind,
wobei das Funkhaupteinrichtung-Auswahlverfahren die Schritte umfasst:
Empfangen einer Vielzahl von Netzwerkverwaltungspaketen, die durch die Vielzahl von Funkhaupteinrichtungen (111, 121, 131, 141, 151) entsprechend der Vielzahl von Funkzellen (101, 102, 103, 104, 105) übertragen wurden;
Erhalten, durch die Funknebeneinrichtung, von Informationen, anzeigend eine Intra-Funkzellen-Nebeneinrichtungsposition, welche eine Installationsposition der Funknebeneinrichtung in der Funkzelle (101, 102, 103, 104, 105) ist, in welcher die Funknebeneinrichtung installiert ist, der Vielzahl von Funkzellen (101, 102, 103, 104, 105);
Erhalten, aus der Vielzahl von Netzwerkverwaltungspaketen, von Informationen, anzeigend Intra-Kommunikationssystem-Zellpositionen, die Positionen, im Kommunikationssystem, der Vielzahl von Funkzellen (101, 102, 103, 104, 105) sind, in welchen jede Funkhaupteinrichtung (111, 121, 131, 141, 151) der Vielzahl von Funkhaupteinrichtungen installiert sind, der Vielzahl von Funkzellen (101, 102, 103, 104, 105) und Erhalten, in Verbindung mit den Informationen, jeweils anzeigend die Intra-Kommunikationssystem-Zellpositionen, von Messwerten von empfangenen Signalstärken der Vielzahl von Netzwerkverwaltungspaketen;
Bereitstellen von vorhergesagten Werten der empfangenen Signalstärken der Vielzahl von Netzwerkverwaltungspaketen an der Intra-Funkzellen-Nebeneinrichtungsposition; und
Durchführen eines Vergleichs der bereitgestellten vorhergesagten Werte mit den erhaltenen Messwerten, und Bestimmen, als eine Verbindungsziel-Funkhaupteinrichtung, die durch die Funknebeneinrichtung zu verbinden ist, einer geschlussfolgerten Funkhaupteinrichtung aus einem Ergebnis des Vergleichs, die in der Funkzelle (101; 102; 103; 104; 105) installiert ist, in welcher die Funknebeneinrichtung installiert ist.

14. Funkhaupteinrichtung-Auswahlverfahren nach Anspruch 13, wobei die Vielzahl von Funkzellen (101, 102, 103, 104, 105) eine Vielzahl von Waggons sind, die einen Eisenbahnzug (100) bilden.

## Revendications

1. Système de communication comprenant une pluralité de réseaux sans fil locaux qui correspondent à une pluralité prédéterminée de cellules sans fil ;
chaque réseau sans fil local dans la pluralité de réseaux sans fil locaux (110, 120, 130, 140, 150) comprenant un dispositif maître sans fil (111 ; 121 ; 131 ; 141 ; 151) et au moins un dispositif esclave sans fil, qui sont installés dans chaque cellule sans fil (101, 102, 103, 104, 105) de la pluralité de cellules sans fil (101, 102, 103, 104, 105) ;
dans lequel le dispositif esclave sans fil comprend :
une unité communication sans fil (402), destinée à recevoir une pluralité de paquets de gestion de réseau transmis par une pluralité de dispositifs maîtres sans fil (111, 121, 131, 141, 151) qui correspondent à la pluralité de cellules sans fil (101, 102, 103, 104, 105) ;
une unité reconnaissance de position d'installation (401), destinée à obtenir des informations qui indiquent la position d'un dispositif esclave de cellule sans fil intra qui est une position d'installation du dispositif esclave sans fil dans la cellule sans fil (101 ; 102 ; 103 ; 104 ; 105), dans laquelle est installé le dispositif esclave sans fil, de la pluralité de cellules sans fil (101, 102, 103, 104, 105) ;
une unité mesure de l'intensité du signal reçu (406), destinée à obtenir, à partir de la pluralité de paquets de gestion de réseau, des informations qui indiquent les positions des cellules du système de communication intra, qui sont les positions, dans le système de communication, de la pluralité de cellules sans fil (101, 102, 103, 104, 105) dans lesquelles est installé chaque dispositif maître sans fil (111, 121, 131, 141, 151) de la pluralité de dispositifs maîtres sans fil (111, 121, 131, 141, 151), de la pluralité de cellules sans fil (101, 102, 103, 104, 105), et obtenir, en association avec les informations qui indiquent les positions des cellules du système de communication intra, des valeurs mesurées des intensités des signaux reçus de la pluralité de paquets de gestion de réseau ;
une unité fourniture d'une valeur prédite de l'intensité du signal reçu (407), destinée à fournir des valeurs prédites des intensités des signaux reçus de la pluralité de paquets de gestion de réseau au niveau de la position du dispositif esclave de cellule sans fil intra ;
une unité détermination de dispositif maître sans fil de connexion (408), destinée à exécuter une comparaison entre les valeurs prédites fournies par l'unité fourniture d'une valeur prédite de l'intensité du signal reçu (407), et les valeurs mesurées obtenues par l'unité mesure de l'intensité du signal reçu (406), et à indiquer, en tant que dispositif maître sans fil de destination de connexion à connecter par le dispositif esclave sans fil, un dispositif maître sans fil impliqué, sur la base du résultat de la comparaison, installé dans la cellule sans fil (101 ; 102 ; 103 ; 104 ; 105) dans laquelle est installé le dispositif esclave sans fil ; et
un processeur de connexion (409), destiné à exécuter un traitement visant à établir une connexion avec le dispositif maître sans fil de destination de connexion indiqué par l'unité détermination de dispositif maître sans fil de connexion (408).

2. Système de communication selon la revendication 1, dans lequel :
la pluralité de cellules sans fil (101, 102, 103, 104, 105) est une pluralité de wagons qui forment un train de chemin de fer (100).

3. Système de communication selon la revendication 2, dans lequel :
chacun des paquets de gestion de réseau comprend des informations de numéro de wagon, qui indiquent un numéro de wagon attribué à chaque wagon de la pluralité de wagons, le numéro de wagon attribué à chaque wagon indiquant l'ordre de chaque wagon de la pluralité de wagons dans le train de chemin de fer constitué par un ensemble de la pluralité de wagons ; et
le numéro de wagon indiqué par les informations de numéro de wagon incluses dans un paquet de gestion de réseau, est un numéro de wagon attribué à un wagon dans lequel est installé un dispositif maître sans fil en tant que source de transmission qui transmet le paquet de gestion de réseau.

4. Système de communication selon la revendication 3, dans lequel :
l'unité fourniture d'une valeur prédite de l'intensité du signal reçu (407) fournit :
une première valeur prédite qui est une valeur prédite de l'intensité d'un signal reçu d'un paquet de gestion de réseau transmis en provenance d'un dispositif maître sans fil installé dans la même voiture que celle où est installé le dispositif esclave sans fil ; et
des secondes valeurs prédites qui sont des valeurs prédites des intensités des signaux reçus des paquets de gestion de réseau transmis en provenance des dispositifs maîtres sans fil installés dans des wagons, disposés à l'avant et à l'arrière du wagon dans lequel est installé le dispositif esclave sans fil.

5. Système de communication selon la revendication 4, dans lequel :
l'unité détermination de dispositif maître sans fil de connexion (408) est adaptée de façon à :
agencer les valeurs mesurées obtenues par l'unité mesure de l'intensité du signal reçu (406), dans l'ordre indiqué par les informations de numéro de wagon, qui indiquent l'ordre des wagons et qui sont incluses dans le paquet de gestion de réseau ;
comparer les valeurs mesurées et les première et seconde valeurs prédites fournies en provenance de l'unité fourniture d'une valeur prédite de l'intensité du signal reçu (407), en générant de ce fait des différences entre les valeurs mesurées et les première et seconde valeurs prédites de chaque wagon ;
reconnaître un wagon indiqué par une différence qui est la plus petite des différences générées, en tant que cellule sans fil (101 ; 102 ; 103 ; 104 ; 105) dans laquelle est installé le dispositif esclave sans fil ; et
indiquer un dispositif maître sans fil impliqué installé dans la cellule sans fil (101 ; 102 ; 103 ; 104 ; 105) en tant que dispositif maître sans fil avec lequel le dispositif esclave sans fil doit être connecté.

6. Système de communication selon l'une quelconque des revendications 1 à 5, dans lequel :
l'unité fourniture d'une valeur prédite de l'intensité du signal reçu (407) est adaptée de façon à :
contenir à l'avance une table des valeurs prédites des intensités des signaux reçus de la pluralité de paquets de gestion de réseau au niveau d'une pluralité de positions d'installation candidates du dispositif esclave sans fil dans la cellule sans fil (101 ; 102 ; 103 ; 104 ; 105) ; et
sélectionner les valeurs mesurées à utiliser dans la comparaison avec la valeur mesurée en provenance de la table des valeurs prédites, sur la base de la position du dispositif esclave de cellule sans fil intra obtenue par l'unité reconnaissance de position d'installation (401) de façon à fournir les valeurs mesurées sélectionnées.

7. Système de communication selon l'une quelconque des revendications 1 à 5, dans lequel :
l'unité fourniture d'une valeur prédite de l'intensité du signal reçu (407) est adaptée de façon à :
obtenir une table des valeurs prédites des intensités des signaux reçus de la pluralité de paquets de gestion de réseau au niveau d'une pluralité de positions d'installation candidates du dispositif esclave sans fil dans la cellule sans fil (101 ; 102 ; 103 ; 104 ; 105) à partir de la pluralité de paquets de gestions de réseau ; et
sélectionner les valeurs mesurées à utiliser dans la comparaison avec les valeurs mesurées en provenance de la table des valeurs prédites sur la base de la position du dispositif esclave de cellule sans fil intra obtenue par l'unité reconnaissance de position d'installation de façon à fournir les valeurs mesurées sélectionnées.

8. Système de communication selon l'une quelconque des revendications 1 à 7,
dans lequel le dispositif esclave sans fil comprend en outre :
une unité mesure du temps de fonctionnement d'un dispositif esclave (403), destinée à mesurer le temps de fonctionnement d'un dispositif esclave, qui est le temps qui s'est écoulé à partir de l'instant de la mise en service du dispositif esclave sans fil ; et
une unité décision de la validité d'une balise (405), destinée à extraire les temps de fonctionnement d'un dispositif maître, qui sont les temps de fonctionnement de la pluralité de dispositifs maîtres sans fil, et qui sont inclus dans la pluralité de paquets de gestion de réseau ;
dans lequel l'unité mesure de l'intensité du signal reçu (406) est adaptée de façon à ;
mesurer, si la différence de temps entre le temps de fonctionnement du dispositif esclave, et le temps de fonctionnement du dispositif maître, est inférieure à une différence de temps de référence prédéterminée, les intensités des signaux reçus des paquets de gestion de réseau d'où sont extraits les temps de fonctionnement du dispositif maître.

9. Système de communication selon la revendication 2, dans lequel :
le dispositif esclave sans fil comprend en outre une unité enregistrement d'un numéro de formation d'un train (404), destinée à enregistrer un numéro de formation de train et un numéro de wagon ;
l'unité enregistrement d'un numéro de formation d'un train (404) est adaptée de façon à :
stocker le numéro de formation de train et le numéro de wagon stocké dans les paquets de gestion de réseau transmis par le dispositif maître sans fil de destination de connexion ; et
si le dispositif esclave sans fil est mis hors service, perdre les données enregistrées.

10. Système de communication selon la revendication 9, dans lequel :
le dispositif esclave sans fil comprend en outre :
une unité mesure du temps de fonctionnement d'un dispositif esclave (403), destinée à mesurer le temps de fonctionnement d'un dispositif esclave sans fil, qui est le temps qui s'est écoulé à partir de l'instant de la mise en service du dispositif esclave sans fil ; et
une unité décision de la validité d'une balise (405), destinée à extraire les temps de fonctionnement du dispositif maître sans fil, inclus dans la pluralité de paquets de gestion de réseau ;
l'unité mesure de l'intensité du signal reçu (406) est adaptée de façon à ;
mesurer, si le numéro de formation de train et le numéro de wagon ne sont pas stockés dans l'unité enregistrement d'un numéro de formation d'un train (404) et, si la différence de temps entre le temps de fonctionnement du dispositif esclave, et le temps de fonctionnement du dispositif maître, est inférieure à une différence de temps de référence prédéterminée, les intensités des signaux reçus des paquets de gestion de réseau d'où sont extraits les temps de fonctionnement du dispositif maître.

11. Dispositif esclave sans fil inclus dans un système de communication qui comprend une pluralité de réseaux sans fil locaux qui correspondent à une pluralité prédéterminée de cellules sans fil (101, 102, 103, 104, 105) ;
dans lequel chaque réseau sans fil local dans la pluralité de réseaux sans fil locaux, comprend un dispositif maître sans fil (111 ; 121 ; 131 ; 141 ; 151) et au moins un dispositif esclave sans fil, qui sont installés dans chaque cellule sans fil de la pluralité de cellules sans fil (101, 102, 103, 104, 105) ;
le dispositif esclave sans fil comprenant :
une unité communication sans fil (402), destinée à recevoir une pluralité de paquets de gestion de réseau transmis par une pluralité de dispositifs maîtres sans fil qui correspondent à la pluralité de cellules sans fil (101, 102, 103, 104, 105) ;
une unité reconnaissance de position d'installation (401), destinée à obtenir des informations qui indiquent la position d'un dispositif esclave de cellule sans fil intra qui est une position d'installation du dispositif esclave sans fil dans la cellule sans fil (101 ; 102 ; 103 ; 104 ; 105), dans laquelle est installé le dispositif esclave sans fil, de la pluralité de cellules sans fil (101, 102, 103, 104, 105) ;
une unité mesure de l'intensité du signal reçu (406), destinée à obtenir, à partir de la pluralité de paquets de gestion de réseau, des informations qui indiquent les positions des cellules du système de communication intra, qui sont les positions, dans le système de communication, de la pluralité de cellules sans fil (101, 102, 103, 104, 105) dans lesquelles est installé chaque dispositif maître sans fil (111, 121, 131, 141, 151) de la pluralité de dispositifs maîtres sans fil (111, 121, 131, 141, 151), de la pluralité de cellules sans fil (101, 102, 103, 104, 105), et obtenir, en association avec les informations qui indiquent les positions des cellules du système de communication intra, des valeurs mesurées des intensités des signaux reçus de la pluralité de paquets de gestion de réseau ;
une unité fourniture d'une valeur prédite de l'intensité du signal reçu (407), destinée à fournir des valeurs prédites des intensités des signaux reçus de la pluralité de paquets de gestion de réseau au niveau de la position du dispositif esclave de cellule sans fil intra ;
une unité détermination de dispositif maître sans fil de connexion (408), destinée à exécuter une comparaison entre les valeurs prédites fournies par l'unité fourniture d'une valeur prédite de l'intensité du signal reçu (407), et les valeurs mesurées obtenues par l'unité mesure de l'intensité du signal reçu (406), et à indiquer, en tant que dispositif maître sans fil de destination de connexion à connecter par le dispositif esclave sans fil, un dispositif maître sans fil impliqué, à partir du résultat de la comparaison, installé dans la cellule sans fil dans laquelle est installé le dispositif esclave sans fil ; et
un processeur de connexion (409), destiné à exécuter un traitement visant à établir une connexion avec le dispositif maître sans fil de destination de connexion indiqué par l'unité détermination de dispositif maître sans fil de connexion (408).

12. Dispositif esclave sans fil selon la revendication 11, dans lequel la pluralité de cellules sans fil (101, 102, 103, 104, 105) est une pluralité de wagons qui forment un train de chemin de fer (100).

13. Procédé de sélection d'un dispositif maître sans fil, qui est exécuté par un dispositif esclave sans fil inclus dans un système de communication qui comprend une pluralité de réseaux sans fil locaux qui correspondent à une pluralité prédéterminée de cellules sans fil (101, 102, 103, 104, 105), dans lequel chaque réseau sans fil local dans la pluralité de réseaux sans fil locaux, comprend un dispositif maître sans fil (111, 121, 131, 141, 151) et au moins un dispositif esclave sans fil qui sont installés dans chaque cellule sans fil (101, 102, 103, 104, 105) de la pluralité de cellules sans fil (101, 102, 103, 104, 105) ;
la procédé de sélection d'un dispositif maître sans fil comprenant les étapes consistant à :
recevoir une pluralité de paquets de gestion de réseau transmis par la pluralité de dispositifs maîtres sans fil (111, 121, 131, 141, 151) qui correspondent à la pluralité de cellules sans fil (101, 102, 103, 104, 105) ;
obtenir, à l'aide du dispositif esclave sans fil, des informations qui indiquent la position d'un dispositif esclave de cellule sans fil intra qui est une position d'installation du dispositif esclave sans fil dans la cellule sans fil (101 ; 102 ; 103 ; 104 ; 105), dans laquelle est installé le dispositif esclave sans fil, de la pluralité de cellules sans fil (101, 102, 103, 104, 105) ;
obtenir, à partir de la pluralité de paquets de gestion de réseau, des informations qui indiquent les positions des cellules du système de communication intra, qui sont les positions, dans le système de communication, de la pluralité de cellules sans fil (101, 102, 103, 104, 105) dans lesquelles est installé chaque dispositif maître sans fil (111, 121, 131, 141, 151) de la pluralité de dispositifs maîtres sans fil, de la pluralité de cellules sans fil (101, 102, 103, 104, 105), et obtenir, en association avec les informations qui indiquent les positions des cellules du système de communication intra, des valeurs mesurées des intensités des signaux reçus de la pluralité de paquets de gestion de réseau ;
fournir des valeurs prédites des intensités des signaux reçus de la pluralité de paquets de gestion de réseau au niveau de la position du dispositif esclave de cellule sans fil intra ; et
exécuter une comparaison entre les valeurs prédites fournies et les valeurs mesurées obtenues, et indiquer, en tant que dispositif maître sans fil de destination de connexion à connecter par le dispositif esclave sans fil, un dispositif maître sans fil impliqué, à partir du résultat de la comparaison, installé dans la cellule sans fil (101 ; 102 ; 103 ; 104 ; 105) dans laquelle est installé le dispositif esclave sans fil.

14. Procédé de sélection d'un dispositif maître sans fil selon la revendication 13, dans lequel la pluralité de cellules sans fil (101, 102, 103, 104, 105) est une pluralité de wagons qui forment un train de chemin de fer (100).
